# EUROPEAN PATENT APPLICATION

(11) **EP 4 231 431 A1**
(43) Date of publication of application: **23.08.2023**
(21) Application number: 21879727.2
(22) Date of filing: 04.08.2021
(51) Int. Cl.: H01M 50/446, C08J 9/36, H01M 50/429, H01M 50/434, H01M 50/443

(54) **COATING LIQUID, POROUS FILM, AND LITHIUM-ION BATTERY**

(30) Priority: 14.10.2020 JP 2020172946
(71) Applicant: The Japan Steel Works, Ltd., Tokyo 141-0032 (JP); Attaccato Limited Liability Company, Izumi-shi, Osaka 594-0004 (JP)
(72) Inventor: ISHIGURO, Ryo, Tokyo 141-0032 (JP); NAKAMURA, Satoru, Tokyo 141-0032 (JP); KUKEN, Yusuke, Tokyo 141-0032 (JP); MUKAI, Takashi, Izumi-shi, Osaka 594-1157 (JP); IKEUCHI, Yuta, Izumi-shi, Osaka 594-1157 (JP); SAKAMOTO, Taichi, Izumi-shi, Osaka 594-1157 (JP); TORISU, Keita, Izumi-shi, Osaka 594-1157 (JP); YAMASHITA, Naoto, Izumi-shi, Osaka 594-1157 (JP)
(74) Representative: Cabinet Netter
(86) International application number: PCT/JP2021/029033
(87) International publication number: WO 2022/079985

(57) **Abstract**

Properties of a porous film used as a separator of a lithium ion cell are improved. A porous film (separator) of the present invention is a porous film including: a porous base substance S; and a coating film CF arranged on a surface of the porous base substance, the coating film includes: alkali silicate; and a first filler, the first filler is made of inorganic particles, and a content of the alkali silicate is equal to or more than 0.05 weight% with respect to the inorganic particles. The inorganic particle includes a material selected from nano silica, micro silica, carbon nanotube, talc, alumina, boehmite, aluminum hydroxide and glass fiber, and the porous film includes a second filler (a hydrophilic group of a cellulose is substituted with a hydrophobic group), a content of which is equal to or more than 0.05 weight% with respect to the inorganic particles. By usage of the porous film, the cell properties such as the thermal resistance and the cycle property can be improved.

## Description

### TECHNICAL FIELD

The present invention relates to coating liquid for a porous film used in a separator of a cell (battery), and is applicable to coating liquid, a porous film and a lithium ion cell.

### BACKGROUND ART

The field of application of a secondary cell has been evolved to electronic components to auto vehicles, large-scale power storage systems and others. Particularly, attention has been paid to lithium ion cells (secondary cells) each being allowed to be downsized and lightweight and having a high energy density.

For example, a Patent Document 1 discloses a non-aqueous binder in an electrode for a lithium ion cell made of a complex compound of a cellulose nanofiber and a thermoplastic fluorine-based resin, in which the cellulose nanofiber has a fiber diameter that is equal to or larger than 0.002 um and equal to or smaller than 1 µm, a fiber length that is equal to or larger than 0.5 um and equal to or smaller than 10 mm, and an aspect ratio (fiber length of the cellulose nanofiber/fiber diameter of the cellulose nanofiber) that is equal to or larger than 2 and equal to or smaller than 100000.

### RELATED ART DOCUMENT

### PATENT DOCUMENT

Patent Document 1: International Patent Publication WO/2019/064583

### SUMMARY OF THE INVENTION

### PROBLEMS TO BE SOLVED BY THE INVENTION

With increase in a capacity and a power of the lithium ion cell, improvement for more safety has been needed. The present inventors have engaged in research and development regarding a porous film used for a separator of a cell and others, and have enthusiastically studied a porous film having a favorable property.

As explained in detail later, the separator between a positive electrode and a negative electrode of the cell includes a plurality of fine pores each allowing a lithium ion to penetrate therethrough, and the cell can be repeatedly charged and discharged by movement of the lithium ions between the positive electrode and the negative electrode through the pores. This separator plays a role of separating the positive electrode and the negative electrode from each other to prevent short circuit. And, if a temperature of inside of the cell is high for any reason, the movement of the lithium ions is stopped by closing of the fine pores of the separator, and thus, a cell function is stopped "shutdown function".

As described above, the separator plays a role of a safety unit of the cell, and it is necessary to improve the mechanical strength and the thermal resistance of the separator in order to improve the safety.

Therefore, studies on a technique of improving the mechanical strength and the thermal resistance of the separator while maintaining the cell property have been desired.

Other objects and novel characteristics will be apparent from the description of the present specification and the accompanying drawings.

### MEANS FOR SOLVING THE PROBLEMS

Coating liquid for a porous film disclosed in an embodiment of the present application contains inorganic particles and alkali silicate, a content of which is equal to or more than 0.05 weight% of the inorganic particles.

A porous film disclosed in an embodiment of the present application includes a porous base substance and a coating film formed on a surface of the porous base substance, and the coating film contains inorganic particles and alkali silicate, a content of which is equal to or more than 0.05 weight% of the inorganic particles.

A lithium ion cell disclosed in an embodiment of the present application is a lithium ion cell including a positive electrode, a negative electrode, a separator and electrolytic solution, and includes the porous film functioning as the separator.

### EFFECTS OF THE INVENTION

According to the coating liquid for the porous film disclosed in an embodiment of the present application, a property of the porous film can be improved.

According to the porous film disclosed in an embodiment of the present application, a property of the porous film can be improved.

According to the lithium ion cell disclosed in an embodiment of the present application, a property of the lithium ion cell can be improved.

### BRIEF DESCRIPTIONS OF THE DRAWINGS

FIG. 1 is a cross-sectional view showing a configuration of a porous film according to a first embodiment;
FIG. 2 is a diagram schematically showing an internal configuration of a lithium ion cell using the porous film according to the first embodiment;
FIG. 3 is a diagram schematically showing a configurational example of the lithium ion cell according to the first embodiment;
FIG. 4 is a diagram showing a step of preparing dispersant liquid of hydrophobic cellulose nanofiber (CeNF);
FIG. 5 is a diagram showing hydrophobization of the cellulose;
FIG. 6 is a perspective view showing a step of applying the coating liquid using a bar coater;
FIG. 7 is a diagram showing a result of a thermal shrinkage test 1;
FIG. 8 is a diagram showing a result of a thermal shrinkage test 1;
FIG. 9 is a diagram showing a result of a thermal shrinkage test 1;
FIG. 10 is a diagram showing a result of a thermal shrinkage test 1;
FIG. 11 is a diagram showing a result of a thermal shrinkage test 2;
FIG. 12 is a diagram showing a SEM observation result;
FIG. 13 is a diagram showing a SEM observation result;
FIG. 14 is a diagram showing a SEM observation result;
FIG. 15 is a diagram showing a SEM observation result;
FIG. 16 is a diagram showing a SEM observation result;
FIG. 17 is a diagram showing a SEM observation result;
FIG. 18 is a graph showing a piercing test result of each of porous films (separators) 1, 2 and A;
FIG. 19 is a graph showing a Gurley number of each of porous films (separators) 1, 2 and A;
FIG. 20 is a diagram showing a cycle property at 30°C;
FIG. 21 is a diagram showing a cycle property at 60°C;
FIG. 22 is a diagram (graph) showing a cell resistance of each of cells 1, 2, A and B;
FIG. 23 is a diagram showing a result of a thermal shrinkage test 2;
FIG. 24 is a diagram showing a cycle property at 30°C;
FIG. 25 is a diagram showing a cycle property at 60°C;
FIG. 26 is a diagram (graph) showing a cell resistance of each of cells 3 and B;
FIG. 27 is a schematic diagram showing a configuration of a manufacturing apparatus according to a third embodiment; and
FIG. 28 is a cross-sectional view schematically showing a configuration of a gravure coating apparatus.

### BEST MODE FOR CARRYING OUT THE INVENTION

Hereinafter, embodiments and working examples will be described in detail with reference to the accompanying drawings. Note that components having the same function are denoted by the same reference signs throughout all the drawings for describing the embodiments, and the repetitive description thereof will be omitted.

### (First Embodiment)

The porous film and a method of manufacturing the same according to the present embodiment will be explained below. The porous film according to the present embodiment can be used as so-called separator of a cell.

### [Explanation for Structure]

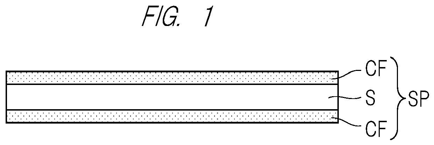

FIG. 1 is a cross-sectional view showing a configuration of a porous film according to a first embodiment. As shown in FIG. 1, the porous film according to the present embodiment is used as a separator SP of a cell, and includes a base substance (porous base substance) S and a coating film (coverage film) CF formed on a surface of the base substance S. As described later, the coating film CF includes inorganic particles functioning as a first filler, a cellulose treated with a SA (may be referred to as SA-treated Ce or SACe) functioning as a second filler, and alkali silicate.

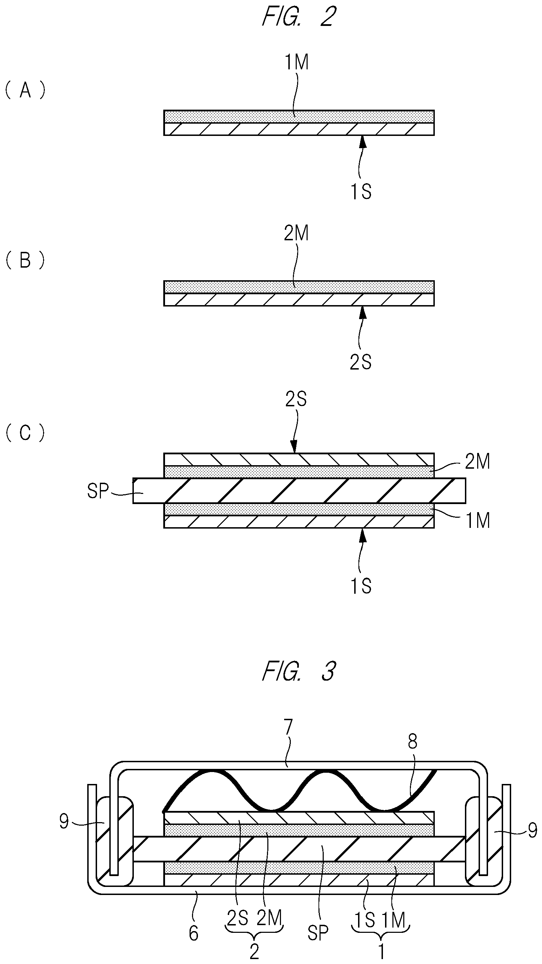

FIG. 2 is a diagram schematically showing an internal configuration of a lithium ion cell using the porous film of the first embodiment, and FIG. 3 is a diagram schematically showing a configurational example of the lithium ion cell of the first embodiment. FIG. 2(A) shows a configuration of a positive electrode, FIG. 2(B) shows a configuration of a negative electrode, and FIG. 2(C) shows a configuration of an electrode group. A cell of FIG. 3 is called coin cell.

The positive electrode 1 is made of a current collector 1S and a positive-electrode mixture layer 1M formed in its upper side as shown in FIG. 2(A), and the negative electrode 2 is made of a current collector 2S and a negative-electrode mixture layer 2M formed in its upper side as shown in FIG. 2(B). As shown in FIG. 2(C), the lithium ion cell includes the positive electrode 1, the negative electrode 2 and the separator SP arranged between these electrodes, and the positive electrode 1 and the negative electrode 2 face each other so that each of the positive-electrode mixture layer 1M and the negative-electrode mixture layer 2M are in contact with the separator SP. A laminated body (also referred to as electrode group) made of the positive electrode 1, the negative electrode 2 and the separator SP is housed together with the electrolytic solution in a cell package (a pouch made of a laminated film, a cell can or others), and is sealed in a state in which a positive-electrode terminal (such as a part of the current collector 1S or a conducting portion electrically connected to the current collector 1S) and a negative-electrode terminal (such as a part of the current collector 2S or a conducting portion electrically connected to the current collector 2S) are exposed out.

The cell (coin cell) shown in FIG. 3 includes a can 6, and a cylindrically-shaped cell includes a can 6, and this can 6 houses an electrode group in which the positive electrode 1 and the negative electrode 2 are laminated so as to sandwich the separator SP therebetween. The current collector 1S of the positive electrode 1 on a lower end surface of the electrode group is mounted on the can (cell can) 6. The current collector 2S of the negative electrode 2 on an upper end surface of the electrode group is arranged on a back surface side of a cap (cell cap) 7. In this case, note that a washer 8 is arranged between the cap (cell cap) 7 and the current collector 2S of the negative electrode 2 so as to be electrically connected to one another. A thermal-resistant gasket (sealing member for fixation) is arranged at an overlap portion between the can 6 and the cap 7, and the electrolytic solution (not illustrated) or others introduced into the can 6 is sealed. In this case, note that the coin cell has been explained here. However, the cell configuration is not limited to this, and, for example, a cylindrical cell or a laminated cell is also applicable.

As described above, the lithium ion cell includes the positive electrode 1, the negative electrode 2, the separator SP and the electrolytic solution, and the separator SP is arranged between the positive electrode 1 and the negative electrode 2. The separator SP has a lot of fine pores. For example, at the time of charge, that is, when a charger is connected between the positive electrode (the bottom of the can 6) and the negative electrode (the upper side of the cap 7), the lithium ion inserted into a positive-electrode active material is desorbed, and is released into the electrolytic solution. The lithium ion released into the electrolytic solution moves in the electrolytic solution, passes the fine pores of the separator, and reaches the negative electrode. The lithium ion having reached the negative electrode is inserted into a negative-electrode active material configuring the negative electrode.

As described above, the lithium ion moves between the positive electrode and the negative electrode through the fine pores (not illustrated) arranged in the base substance S shown in FIG. 1, and therefore, the electric charge and discharge can be repeated.

In this case, in the porous film of the present embodiment, as shown in FIG. 1, the coating film CF is arranged on the surface of the base substance S having a lot of fine pores arranged therein. The coating film CF includes inorganic particles functioning as a first filler, a cellulose treated with SA functioning as a second filler (also referred to as SA-treated Ce) and alkali silicate. A "SA" treatment is a treatment for hydrophobization of a part of a hydrophilic group of the cellulose.

As described above, in the present embodiment, by the arrangement of the coating film on the surface of the base substance S, the mechanical strength and the thermal resistance of the porous film (separator) can be improved. The coating film CF is not formed to cover all the fine pores of the base substance S, and a Gurley number (gas permeability, [sec/100cc]) of the base substance S (the porous film, separator) including the coating film CF formed thereon is equal to or larger than 200 and equal to or smaller than 3000, and thus, air permeability is secured.

Particularly, by the addition of the alkali silicate to the coating liquid, the mechanical strength and the thermal resistance of the porous film (separator) can be improved while the electrical properties (an output property and a cycle property (lifetime)) of the cell are improved.

### [Explanation for Manufacturing Method]

In the following, steps of manufacturing the porous film of the present embodiment will be explained, and configurations of the porous film and the coating film will be defined.

The steps of manufacturing the porous film of the present embodiment include the following steps.

### <<1: Step of Preparing Base Substance (Porous Film before Coating)>>

As the base substance S, a base substance that is available without particular limitation and that is particularly generally used in a porous film for a lithium ion cell is preferable, and a fine porous film is applicable. For example, a commercialized polyethylene fine porous film is applicable.

### <<2: Step of Preparing Coating Liquid>>

### 2-1) Preparation of First Filler

In the present embodiment, the inorganic particles (inorganic filler) are used as the first filler.

A type of the inorganic filler is not particularly limited. For example, alumina, boehmite, aluminum hydroxide, nano silica, micro silica, carbon nanotube, talc, glass fiber or others is applicable. Particularly, alumina is preferably used because of being difficult to cause a chemical reaction with the electrolytic solution, which results in stability in term of a physical property and a manufacturing technique. A particle shape of the alumina is not limited. For example, a spherical shape or a flattened shape is applicable. An average grain diameter of the alumina is preferably equal to or larger than 500 nm and equal to or smaller than 1000 nm. The average grain diameter can be measured by a laser diffraction and scattering method. And, mixture of alumina having different average grain diameters may be used as the alumina particles. High purity alumina is used as the alumina. Even if impurity elements (such as Si, Fe, Na, Mg, Cu) may be contained therein, a Si concentration is preferably equal to or less than 400 ppm, a Fe concentration is preferably equal to or less than 300 ppm, a Na concentration is preferably equal to or less than 200 ppm, a Mg concentration is preferably equal to or less than 100 ppm, and a Cu concentration is preferably equal to or less than 100 ppm.

### 2-2) Preparation of Second Filler

In the present embodiment, hydrophobic (SA-treated) cellulose (may be referred to as SA-treated Ce) is used as the second filler.

### (Hydrophobization)

The cellulose (Cell-OH, Ce) is a carbohydrate expressed by (C₁₂H₂₀O₁₀)ₙ. For example, this is expressed by the following chemical formula (Chemical Formula 1). In this chemical formula, the term "n" representing the average number of repeat units is a number that is equal to or larger than 1, and is preferably 10 to 10000, more preferably 50 to 2000.

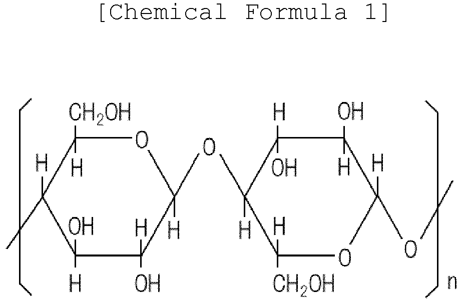

Incidentally, as shown in the following Chemical Formula 2, a cellulose in which a part of a plurality of hydroxyl groups of the carbohydrate expressed by (C₁₂H₂₀O₁₀)ₙ is substituted with a group having a hydroxyl group (for example, "-R-OH" such as - CH₂OH ("R" represents a bivalent hydrocarbon group)) may be used. 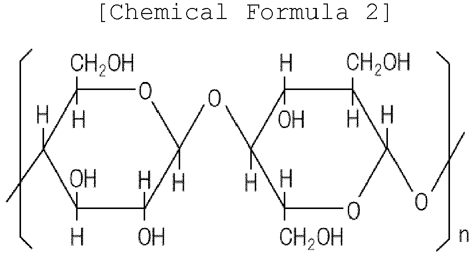 As seen from the Chemical Formulas 1 and 2, the cellulose has the hydroxyl group (hydrophilic group). The hydrophobization (lipophilization) treatment is performed to this by using a hydrophobizing agent (such as carboxylic compound). In other words, the hydroxyl group (-OH) moiety of the cellulose is substituted with the hydrophobic group. More specifically, (one or) some of the hydroxyl groups of the cellulose are esterified by a carboxylic compound (R-CO-OH). In other words, the hydroxyl group (-OH) moiety of the cellulose is changed to an ester bond (-O-CO-R, carboxylic group). Note that all hydroxyl groups of the cellulose are unnecessary to be substituted with the hydrophobic groups, and one or some of the hydroxyl groups may be substituted. An example of the esterifying (hydrophobic) reaction of the cellulose is expressed by the following reaction formula. The hydrophobic cellulose may be referred to as SA-treated Ce. 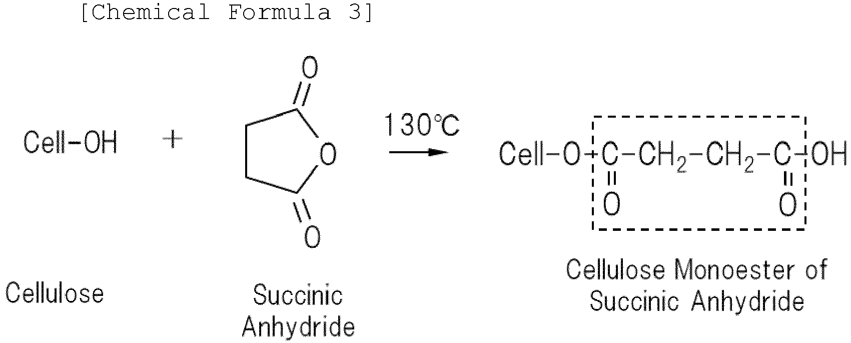 The hydrophobizing agent is not particularly limited if the hydrophobizing agent has a composition capable of providing the hydrophobic group to the hydrophilic group of the cellulose. For example, the carboxylic compound can be used. Particularly, a compound having two or more carboxylic groups, an acid anhydride of the compound having two or more carboxylic groups or others is preferably used. Among the compounds each having two or more carboxylic groups, a compound (dicarboxylic compound) having two carboxylic groups is preferably used.

As the compound having two carboxylic groups, dicarboxylic acid compounds such as propanedioic acid (malonic acid), butanedioic acid (succinic acid), pentanedioic acid (glutaric acid), hexanedioic acid (adipic acid), 2-methyl propanedioic acid, 2-methyl butanedioic acid, 2-methyl pentanedioic acid, 1, 2-cyclohexane dicarboxylic acid, 2-butenedioic acid (maleic acid, fumaric acid), 2-pentenedioic acid, 2, 4-hexadienedioic acid, 2-methyl-2-butenedioic acid, 2-methyl-2-pentenedioic acid, 2-methylidene butanedioic acid (itaconic acid), benzene-1, 2-dicarboylic acid (phthalic acid), benzene-1, 3-dicarboylic acid (isophthalic acid), benzene-1, 4-dicarboylic acid (terephthalic acid) and ethanedioic acid (oxalic acid) are exemplified. As the acid anhydride of the compound having two carboxylic groups, acid anhydrides of the dicarboxylic compounds or compounds containing a plurality of carboxylic groups such as maleic anhydride, succinic anhydride, phthalic anhydride, glutaric anhydride, adipic anhydride, itaconic anhydride, pyromellitic anhydride, 1, 2-cyclohexane dicarboxylic anhydride are exemplified. As a derivative of the acid anhydride of the compound having two carboxylic groups, materials that are obtained by substituting at least a part of hydrogen atoms of the acid anhydride of the compound having the carboxylic group such as dimethyl maleic anhydride, diethyl maleic anhydride and diphenyl maleic anhydride, with a substituent group (such as an alkyl group, a phenyl group or others), are exemplified. Among these materials, the maleic anhydride, succinic anhydride or the phthalic anhydride is preferable because of being industrially readily applicable and easily gasified.

### (Fibrillating Process)

The cellulose may be subjected to a fibrillating process to be miniaturized (nano-sized). The fibrillating process (miniaturizing process) includes a chemical process method, a mechanical process method and others. Combination of these methods may be used. By such a fibrillating process (miniaturizing process), the cellulose having a fiber length (L) that is equal to or larger than 3 nm and equal to or smaller than 10 um and an aspect ratio (length (L)/diameter (D)) that is equal to or larger than 0.01 and equal to or smaller than 5000 can be provided. Such a miniaturized cellulose fiber to be nano-sized as described above is referred to as the cellulose nanofiber (CeNF).

The miniaturization (nano-sizing) process for the cellulose as described above may be performed before or after the hydrophobization treatment.

### (Method of Preparing Hydrophobic CeNF dispersed in Solvent)

The hydrophobic CeNF is preferably used to be dispersed in solvent in order to avoid the gathering to increase dispersion in the coating liquid.

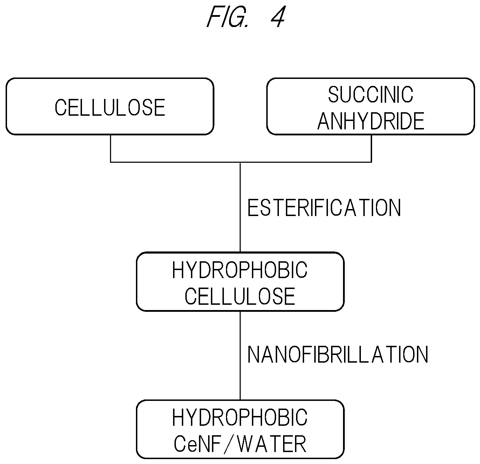

FIG. 4 is a diagram showing a step of preparing the dispersant solution of the hydrophobic CeNF. For example, as shown in FIG. 4, the (solid such as powder) cellulose and the (solid such as tablet) succinic anhydride are mixed at 100°C or higher. These materials are mixed by, for example, a pressure kneader for 20 minutes at 125°C. Weights of the cellulose and the succinic anhydride are, for example, 90 wt% (weight%, mass%) and 10 wt%.

The esterification reaction is generated by the agitation under the heating state as described above to generate the hydrophobic cellulose. After this, the mixture is rinsed with acetone or others in order to remove the unreacted succinic anhydride.

Then, the generated hydrophobic cellulose is dispersed in aqueous solvent (such as water and/or alcohols, water (H₂O) in this case).

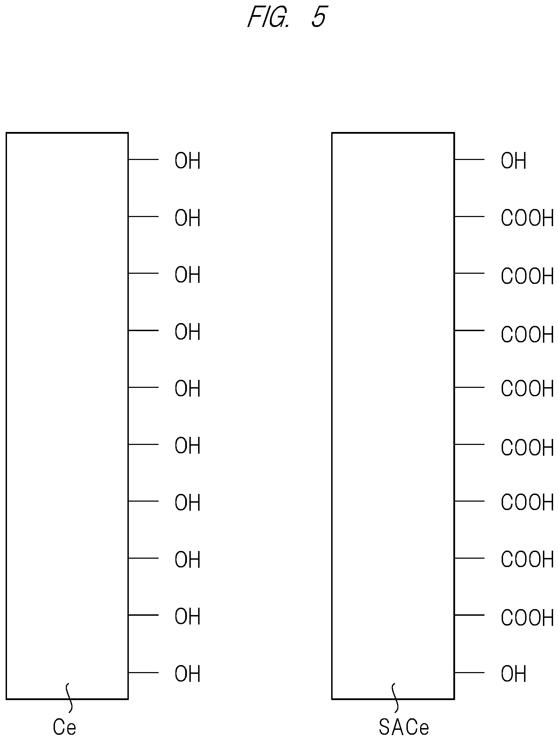

FIG. 5 is a diagram showing the hydrophobization of the cellulose (hydrophobic Ce). As shown in FIG. 5, the hydroxyl group (-OH) of the cellulose is substituted with the hydrophobic group (-COOH) by the hydrophobization.

FIG. 5 shows a state in which eight of ten hydroxyl groups (-OH) of the cellulose are substituted with the hydrophobic groups (-COOH).

In this case, an amount of the hydrophobic groups (-COOH) in the SA-treated Ce can be calculated from an acid value. The acid value represents a value of milligrams of potassium hydroxide that is necessary for neutralization of an acid component contained in a sample of 1 g, and this can be measured based on "JIS-K0070 Test methods for acid value, saponification value, ester value, iodine value, hydroxyl value and unsaponifiable matter of chemical products". For example, the SA-treated Ce having the acid value of 76.5 mg/g (KOH, Formula weight: 56.11) contains the hydrophobic groups (-COOH) of 1.36×10⁻³ mol.

Then, the miniaturization (fibrillating, nano-sizing) process is performed. The process using, for example, a miniaturization machine (mass colloider, beads mill) is performed to form the nano-sized cellulose in the dispersant solution of the SA-treated Ce. In this manner, the dispersant solution of the SA-treated CeNF can be provided.

As described above, note that the fibrillation process (miniaturization process) may be performed to the hydrophobized cellulose, or the hydrophobization process may be performed to the cellulose after the fibrillation process (miniaturization process).

### 2-3) Preparation of Alkali Silicate

As the alkali silicate, liquid glass is preferably used. The liquid glass is silicate aqueous solution of alkaline metal or alkaline-earth metal. For example, not only the salt of sodium silicate (sodium silicate, Na₂O·nSiO₂ (n = 2 to 4)) but also silicate containing Li, K, Rb, Ba, Ca Mg, Sr or others instead of Na and others are applicable, and single use of these materials may be applicable, or combination use of two or more of these materials may be applicable.

The salt of sodium silicate (sodium silicate, Na₂O·nSiO₂ (n = 1 to 5)) can be formed by a heating reaction between diatom earth and caustic soda or dissolution of a heated molten material made of silica sand and soda ash in water, and there are a lot of its inexpensive commercialized products. Addition of such liquid glass can reduce the addition amount of the alumina to be, for example, equal to or less than 90 wt% with respect to a total amount of the solid components of the coating liquid, and can reduce the cost.

When the "n" representing the number of SiO₂ is smaller than 1 or larger than 5, the binding property is deteriorated, and therefore, the "n" is preferably equal to or larger than 1 and equal to or smaller than 5. Particularly, in a viewpoint of high binding property, the "n" is preferably equal to or larger than 2 and equal to or smaller than 4. If the binding property is insufficient, peeling and cracks significantly tend to be caused by external factors such as volume change of the electrode at the time of the charge/discharge, the piercing test or others.

The sodium silicate and the potassium silicate of the above-descried alkali silicates are excellent particularly in the binding property, and therefore, its amount can be equal to or less than 80 wt% with respect to the total amount of the solid components of the coating liquid. On the other hand, the lithium silicate is less sufficient in the binding property than the potassium silicate and the sodium silicate, but can provide a cell having a small resistance. In a viewpoint of achievement of the excellent binding property and the small resistance, mixture of the lithium silicate with the potassium silicate or the sodium silicate is preferably used. If the priority is put on the binding property, the larger amount of the potassium silicate or the sodium silicate may be added. If the priority is put on the small resistance, the larger amount of the lithium silicate may be added.

### 2-4) Preparation of Other Additives

As other additives, a thickener (such as carboxymethyl cellulose, xanthane gum, guar gum, alginic acid), a binder (such as acrylic resin, acrylic binder, fluorine resin), a dispersant (such as surfactant, alcohol) or others may be added.

The carboxymethyl cellulose is a water-soluble cellulose salt, and increases the viscosity to cause the good coatability when being added to the coating liquid. Addition of the acrylic resin causes the good bonding performance of the materials in the coating liquid. As the specific water-soluble cellulose salts, carboxymethyl cellulose-lithium, carboxymethyl cellulose-sodium, carboxymethyl cellulose-potassium, carboxymethyl cellulose-ammonium and others are exemplified. Note that the simply-described carboxymethyl cellulose (CMC) in the present specification means the carboxymethyl cellulose-sodium.

Addition of the dispersant (surfactant, alcohol) causes the good wettability on the base substance S. Particularly when the polyethylene base substance or polypropylene is used, addition of the surfactant causing the large free energy is preferable. An addition amount of the surfactant is preferably equal to or more than 0.001 wt% and equal to or less than 5 wt% of the solid components of the coating liquid. The types of the surfactants include an anionic surfactant, a cationic surfactant, an ampholytic surfactant, a nonionic surfactant and others, and any type is applicable. However, the non-ionic surfactant is preferable because of causing less foaming.

In this case, the above-described solid components of the coating liquid mean the total amount of the SA-treated CeNF (second filler), the inorganic particles (first filler), the thickener, the binder and the dispersant contained in the coating liquid.

### B) Mixing Step (Agitating Process Step)

The coating liquid is prepared by addition of the inorganic particles (first filler) and other additives, and besides, the alkali silicate to the dispersant solution of the SA-treated CeNF (second filler), and then, by agitation of these materials.

An addition amount of the SA-treated CeNF (second filler) is not particularly limited. However, the addition amount is preferably equal to or more than 0.05 wt% with respect to the inorganic particles (first filler) in viewpoints of the coatability, the cost and the cell performance. An amount of the SA-treated CeNF is preferably equal to or more than 0.2 wt% and equal to or less than 10 wt% with respect to the total amount of the solid components of the coating liquid, and more preferably equal to or more than 0.5 wt% and equal to or less than 5 wt%.

An addition amount of the alkali silicate is not particularly limited. However, the addition amount is preferably equal to or more than 0.05 wt% with respect to the inorganic particles (first filler) in viewpoints of the coatability, the cost and the cell performance. And, an amount of the alkali silicate is preferably equal to or more than 0.3 wt% and equal to or less than 20 wt% with respect to the total amount of the solid components of the coating liquid, more preferably equal to or more than 0.5 wt% and equal to or less than 15 wt% with respect to the same in viewpoints of the coatability, the cost and the cell performance.

As a method of the agitation, a method of rotating a blade attached to a shaft by a motor or others, an oscillation method using ultrasonic wave or others is applicable. Note that the coating liquid may be prepared (mixed, agitated) under a reduced pressure in order to reduce inclusion of bubbles into the coating liquid.

And, a defoamer may be added to the coating liquid. In the addition of the defoamer, its amount is preferably equal to or more than 0.001 wt% and equal to or less than 1 wt% with respect to the total amount of the solid components of the coating liquid. The addition of the defoamer can preferably suppress the bubbles, and therefore, the defoaming step can be simplified or becomes unnecessary. As the defoamer, a publicly-known material such as a silicon-based defoamer (such as polydimethyl siloxane), a surfactant-based defoamer (such as polyethylene glycol fatty acid) or alcohol (such as acetylene diol) is applicable. Among these materials, the silicon-based defoamer is preferable in a viewpoint of difficulty of causing adverse effect on the cell. And, a form of the defoamer is not particularly limited. Any form such as an oil type, a compound type, an emulsion type, a powder type or others is applicable.

### <<3: Step of Coating Base Substance>>

The surface of the base substance S explained in the chapter <<1: Step of Preparing Base Substance (Porous Film before Coating)>> is coated with the coating liquid. The coating method is not limited. For example, a bar coater, a lip coater, a gravure coater, a die coater, a spray coater, a screen coater and others are applicable. By the drying of the coating liquid after the coating, the coating film can be formed on the surface of the base substance S.

A method for drying the coating liquid is not particularly limited if the method can remove the solvent or the dispersant solution contained in the coating liquid. However, for example, a method of a heating process at a temperature that is equal to or higher than 50°C and equal to or lower than 250°C can be exemplified. The method can be performed in retention time of 0.1 to 50 hours as time for the above-described heating process. As environment in the drying, ambient atmosphere, vacuum atmosphere, rare-gas atmosphere, nitrogen atmosphere, carbon dioxide atmosphere, hydrogen atmosphere and others can be exemplified. However, when the environment contains carbon dioxide, the alkali silicate and the carbon dioxide react with each other to generate a carbonate compound (A₂CO₃) or a hydrogen carbonate compound (AHCO₃) (A = at least one element selected from Li, K, Rb, Ba, Ca, Mg and Sr). Therefore, when the environment contains the carbon dioxide, the carbonate compound (A₂CO₃) or the hydrogen carbonate compound (AHCO₃) (A = at least one element selected from Li, K, Rb, Ba, Ca, Mg and Sr) can be contained in the alkali silicate contained in the coating liquid.

Such A₂CO₃ or AHCO₃ has low dissolubility in water, and has a feature of decomposition and releasing out of the carbon dioxide at a voltage exceeding 4.6 V. In other words, when the coating film contains such A₂CO₃ or AHCO₃, the coating film is difficult to absorb moisture, and can have the function of the releasing out of the carbon dioxide at overcharge.

A content of such A₂CO₃ or AHCO₃ is preferably equal to or more than 1 wt% and equal to or less than 50 wt% with respect to the coating film. In order to adjust the content within this range, an environmental pressure may be an absolute pressure of 0.001 to 100 MPa while a concentration of the carbon dioxide may be equal to or more than 400 ppm although varying depending on the heating process temperature and the heating process time. Preferably, the environmental pressure is 0.01 to 50 MPa while the concentration of the carbon dioxide is equal to or more than 1000 ppm. More preferably, the environmental pressure is 0.1 to 10 MPa while the concentration of the carbon dioxide is equal to or more than 2000 ppm.

When the alkali silicate mixed with the powder of A₂CO₃ or AHCO₃ is previously used for the coating liquid, the heating process step under the environment containing the carbon dioxide can be excluded. However, it is preferable to cause the alkali silicate to absorb the carbon dioxide to generate the A₂CO₃ or AHCO₃ because the moisture absorption performance of the coating film can be significantly decreased. A coating film having the high moisture absorption performance absorbs the moisture of the air, and often decreases the cell performance.

When the coating liquid contains the cellulose as the second filler, the A₂CO₃ or AHCO₃ can be homogeneously generated. The homogeneousness is more improved particularly in the cellulose in which the hydrophilic group is substituted with the hydrophobic group or an oxidized cellulose having a structure in which the primary hydroxyl group is oxidized to be converted to the carboxyl group. When the A₂CO₃ or AHCO₃ homogeneously exists in the coating film, the moisture absorption performance is improved, and the function of the releasing out of the carbon dioxide at the overcharge can be homogeneously provided.

As described above, according to the present embodiment, by the addition of the filler and the alkali silicate to the coating liquid, the mechanical strength and the thermal resistance of the porous film (separator) can be improved while the electrical properties (the output property and the cycle property (lifetime)) of the cell are improved.

A working example of the coating liquid, the porous film (separator) and the cell using them according to the present embodiment will be explained below.

### [Working Example A]

### 1: Step of Preparing Base Substance (Porous Film before Coating)

As the base substance S, for example, the commercialized polyethylene fine porous film (produced by CS Technology Co., Ltd., the average pore diameter: 0.06 um, the thickness: 16 um) was used.

### 2: Step of Preparing Coating Liquid

### A) Preparation of Liquid Glass

The liquid glass was the aqueous solution of the alkali silicate as described above. In the present working example, the sodium silicate (Na₂O·3SiO₂ (ESX-2 produced by ADEKA corporation)) was used.

### B) Preparation of SA-treated CeNF

The cellulose was hydrophobized (one (some) of -OH is converted to - COOH) by the succinic anhydride in accordance with the step of FIG. 4. Then, the fibrillating process was performed to the hydrophobized cellulose in the dispersant solution to form the nano-sized cellulose.

### C) Agitating Process

The carboxymethyl cellulose (CMC), the acrylic resin (binder) and octyl phenol ethoxylate (triton X) serving as the surfactant were added to the dispersant solution of the SA-treated cellulose, and then, high purity alumina (having the average grain diameter of 700 nm, produced by SUMITOMO CHEMICAL COMPANY, LIMITED.) was further introduced. Note that the aqueous solvent was further added as the solvent to prepare the mixture liquid. This mixture was agitated at 2000 rpm for 30 minutes by a planetary centrifugal mixer (ARE310 produced by THINKY CORPORATION), and then, the liquid glass (sodium silicate) was added at the end, and these materials were agitated at 25 m/s for 1 minute by a thin-film spin system high-speed mixer (FILMIX produced by Primix corporation) to provide the coating liquid. Regarding the coating liquid, a table 1 shows a solid-component ratio of each coating liquid provided when a ratio of the solid components (cellulose, CMC, binder, surfactant, alumina and liquid glass (sodium silicate)) is 100 wt%. Note that the surfactant was added so that the solution having the solid components of 10 wt% has the above-describe ratio. Besides, as a comparative example A, coating liquid (imitating the commercialized product) without the addition of the liquid glass (sodium silicate) and the dispersant solution of the SA-treated CeNF was also formed.

**[Table 1]**

| | Sample 1 | Sample 2 | Comparative Example A | Comparative Example B |
|---|---|---|---|---|
| | Coating Liquid 1 | Coating Liquid 2 | Coating Liquid A | - |
| Al₂O₃ (700 nm) | 85 wt.% | 85 wt.% | 93.4 wt.% | - |
| CMC | 0.7 wt.% | 1.63 wt.% | 3.71 wt.% | - |
| SA-treated CeNF | 0.93 wt.% | 0 wt.% | 0 wt.% | - |
| Acrylic resin | 2.8 wt.% | 2.8 wt.% | 2.8 wt.% | - |
| Triton X | 0.1 wt.% | 0.1 wt.% | 0.1 wt.% | - |
| Liquid glass | 10.5 wt.% | 10.5 wt.% | 0 wt.% | - |
| Separator | Separator 1 | Separator 2 | Separator A | Uncoated Separator |
| Cell | Cell 1 | Cell 2 | Cell A | Cell B |

In the present working example, note that the ratio (concentration) of the solid components (cellulose, CMC, binder, surfactant, alumina and liquid glass) to the solvent was 40 wt%. However, this ratio (concentration) can be adjusted in a range of about 25 wt% to 50 wt%.

### 3: Step of Coating Base Substance (Step of Preparing Separator)

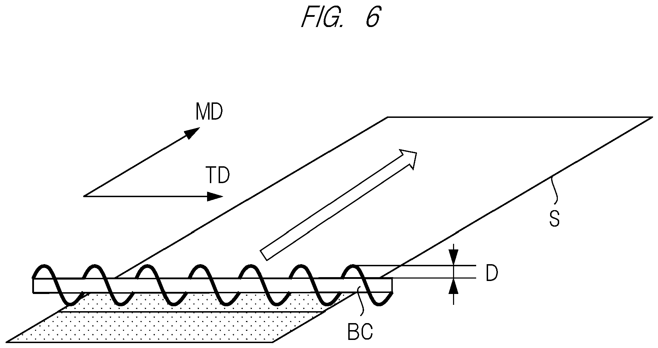

The base substance (PE porous film) explained in the chapter "1. Step of Preparing Base Substance (Porous Film before Coating) " was cut to be of a 50-mm square to provide the base substance (sample piece) S. The coating liquid (any of the coating liquid 1, 2 and A) was applied onto both-side surfaces of this base substance S by a bar coater BC, and the coating film was dried by cool air for about 5 minutes (see FIG. 6). FIG. 6 is a perspective view showing the step of applying the coating liquid using the bar coater. The coating liquid was similarly applied onto the back surface. A term "D" represents a groove depth of the bar coater BC, and a direction of the application is represented by a "MD" direction.

The porous films (separators) 1, 2 and A including the coating layer formed thereon were formed as described above (see the table 1). As a comparative example B, note that a later-described cell B using a porous film (separator) made of only the base substance without the coating layer formed thereon was prepared.

The above-described coating liquid 1, 2 and A and porous films (separators) 1, 2 and A were evaluated as described below.

### 4: Evaluation of Coating Liquid and Separator

### (Coatability)

In the coating liquid 1 and 2, defects such as lumps and cissing on the base substance were not observed, and the coatability was good.

### (Gurley Number)

In the porous films (separators) 1, 2 and A, time taken for completion of passage of the air of 100 ml was measured, and was set as the Gurley number. The number N of samples for the Gurley number was set to 5, and an average value of these values was acquired.

### (Thermal Shrinkage Test 1)

Each of the porous films (separators) 1 and A was let stand inside a vacuum dryer machine at 180 to 220°C for 1 to 72 hours. States of the film before and after the application of the thermal load were observed. A thermal shrinkage rate was calculated based on dimension change of the film before and after the application of the thermal load. Note that the base substance (PE porous film) used for the coating was a dry separator manufactured by uniaxial drawing, and therefore, the thermal shrinkage rate was calculated based on the dimension change in the machine direction (MD direction). A thermal shrinkage rate in a case of failure to measure the dimension because of melting of the film was set to 100%.

### (Thermal Shrinkage Test 2)

Each of the porous films (separators) 2 and A was let stand inside the vacuum dryer machine at 300°C for 1 hour. States of the film before and after the application of the thermal load were observed. A thermal shrinkage rate was calculated based on dimension change of the film before and after the application of the thermal load. Note that the base substance (PE porous film) used for the coating was a dry separator manufactured by uniaxial drawing, and therefore, the thermal shrinkage rate was calculated based on the dimension change in the machine direction (MD direction). A thermal shrinkage rate in a case of failure to measure the dimension because of melting of the film was set to 100%.

### (SEM observation)

A surface of each of the porous films (separators) 1, 2 and A was observed by a SEM (Scanning Electron Microscope).

### (Piercing Test)

Each of the porous films (separators) 1, 2 and A was fixed by a jig, and was pierced by a needle having a diameter of 1 mm at a test speed of 10 mm/min., and the maximum force (N) necessary for completion of the needle piercing was measured.

### 5: Manufacturing of Cell

As a slurry for the positive electrode, a positive-electrode active material (NCM (lithium nickel cobalt manganese oxide, nickel-cobalt-manganese lithium (Li(Ni_{0.6}Co_{0.2}Mn_{0.2})O₂)), an electrically conductive material (acetylene black) and a binder (poly vinylidene fluoride (PVdF)) were mixed to have a solid ratio of "94 : 3 : 3 wt%", and were kneaded to provide the slurry by a planetary centrifugal mixer (AWATORI RENTAROH at 2000 rpm for 15 minutes, produced by Thinky corporation). This slurry was applied onto a current collector (aluminum foil having a thickness of 15 µm) by an applicator, this sample was temporarily dried at 80°C, and then, was roll-pressed by a roll presser, and was dried under a reduced pressure (at 160°C for 10 hours) to form the positive electrode (positive-electrode mixture layer). Note that a capacity density was set to 3.10 mAh/cm².

As a slurry for the negative electrode, a negative-electrode active material (artificial graphite (graphite)), an electrically conductive material (acetylene black), a thickener (carboxymethyl cellulose (CMC)) and a binder (SBR (styrenebutadiene rubber)) were mixed to have a solid ratio of "96 : 1 : 1 : 2 wt%", and were kneaded to provide the slurry by a planetary centrifugal mixer (AWATORI RENTAROH at 2000 rpm for 15 minutes, produced by Thinky corporation). This slurry was applied onto a current collector (copper foil having a thickness of 10 µm) by an applicator, this sample was temporarily dried at 80°C, and then, was roll-pressed by a roll presser, and was dried under a reduced pressure (at 140°C for 10 hours) to form the negative electrode (negative-electrode mixture layer). Note that a capacity density was set to 3.36 mAh/cm².

An R2032 coin cell (cells 1, 2 and A) was manufactured to be made of the porous film (separator) 1, 2 or A, the positive electrode and the negative electrode (see FIG. 3). Note that LiPF₆ of 1 mol/L (EC : DEC = 50 : 50 vol%, +VC: 1wt%) was used as the electrolyte solution.

The cells 1, 2, A and B were evaluated as described below.

### 6: Evaluation of Cell

### (Cycle property)

The cycle property of each coin cell (1, 2 and A) was evaluated by repetitive charging and discharging at an electric current of 0.5 C after charging 10 cycles at an electric current of 0.1 C under a condition of 30°C and a cut-off voltage of 4.2 to 2.5 V. The cycle property was also similarly evaluated under a condition of 60°C.

### (Cell Resistance)

The cell resistance was calculated from a relation between the electric current value and the cell voltage after discharging for 10 seconds at a predetermined electric current after charging 10 cycles at an electric current of 0.1 C under a condition of 30°C and a cut-off voltage of 4.2 to 2.5 V followed by discharging at a predetermined rate (in a high-rate charging/discharging test).

### 7: Result

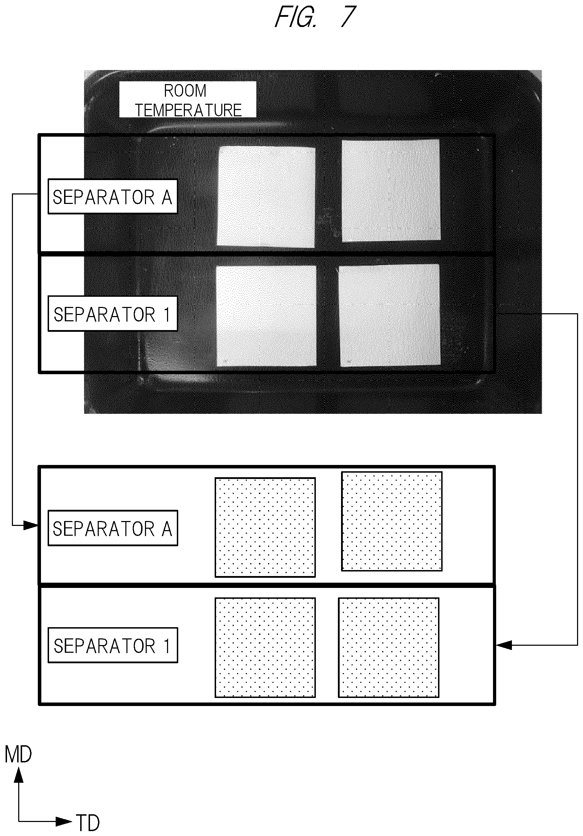

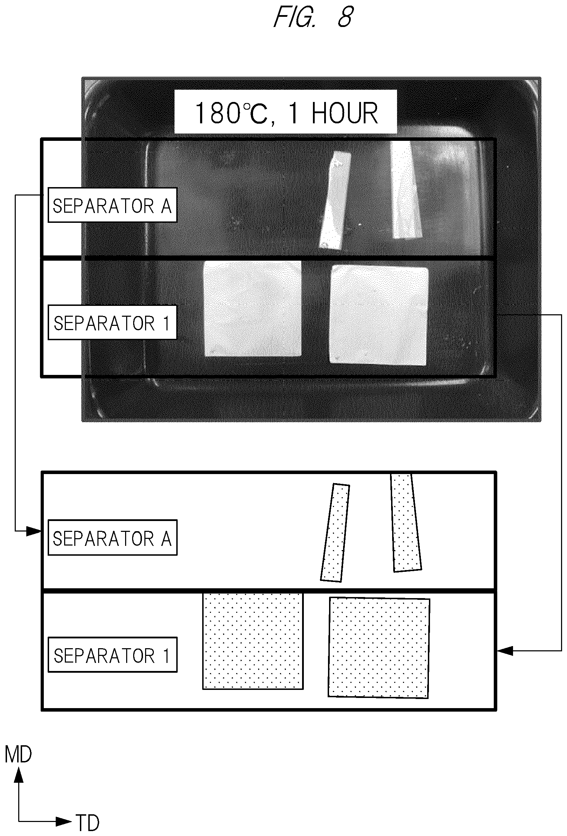

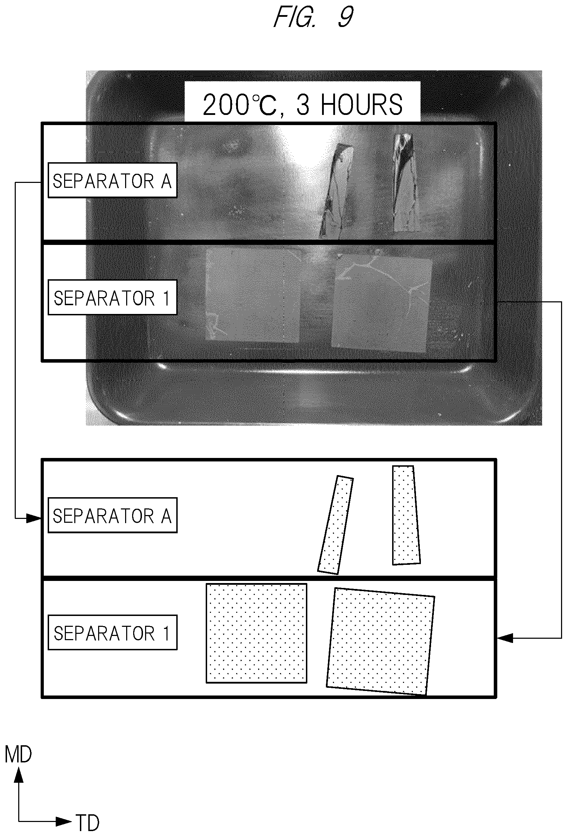

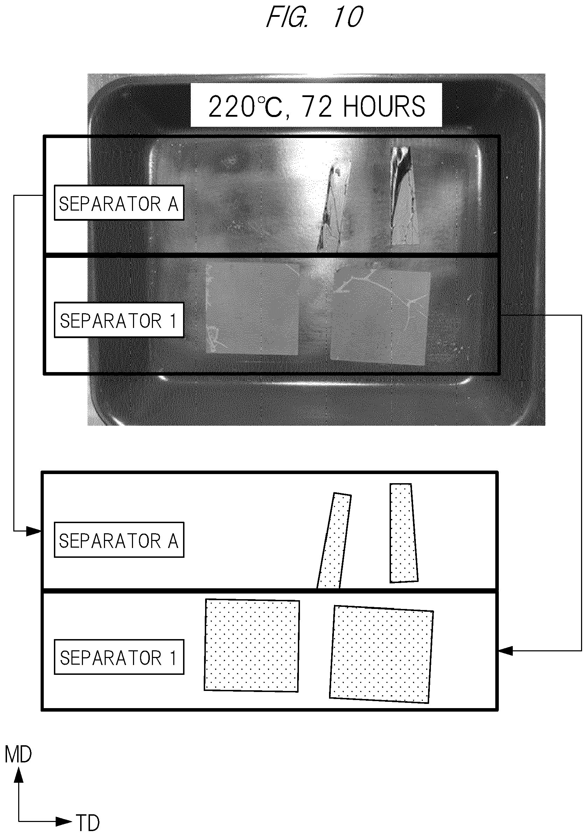

Each of FIGs. 7 to 10 is a diagram showing a result of the thermal shrinkage test 1. An upper part of each drawing shows a photograph showing states of the separator A and the separator 1, and a lower part of each drawing shows a schematic diagram illustrating outlines of the separator A and the separator 1. FIG. 7 shows change at a room temperature for 1 hour, FIG. 8 shows change at 180°C for 1 hour, FIG. 9 shows change at 200°C for 3 hours, and FIG. 10 shows change at 220°C for 72 hours.

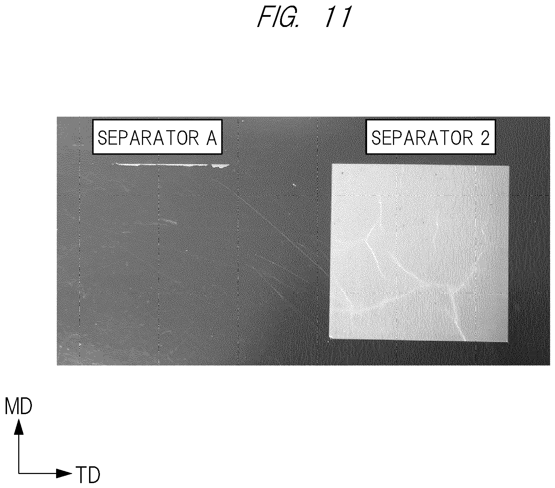

FIG. 11 is a diagram showing a result of the thermal shrinkage test 2. States of the separator A and the separator 2 will be described here.

As shown in FIGs. 7 to 10, in the separator A using the coating liquid A imitating the commercialized product, the film was totally melted only by the application of the thermal load at 180°C for 1 hour, and therefore, it has been found out that the thermal resistance is low (see FIG. 8). On the other hand, in the separator 1 using the coating liquid 1 with the addition of the liquid glass and the cellulose, the thermal shrinkage rate after the application of the thermal load at 220°C for 72 hours was 0.5%, and therefore, it has been found out that the thermal resistance is high (see FIG. 10).

As shown in FIG. 11, in the separator 2 using the coating liquid 2 with the addition of the liquid glass but without the addition of the cellulose, the thermal shrinkage rate after the application of the thermal load at 300°C for 1 hour was 0.5%, and therefore, it has been found out that the thermal resistance is high. In the separator A, note that the film was totally melted at 180°C, and therefore, was not allowed to be measured.

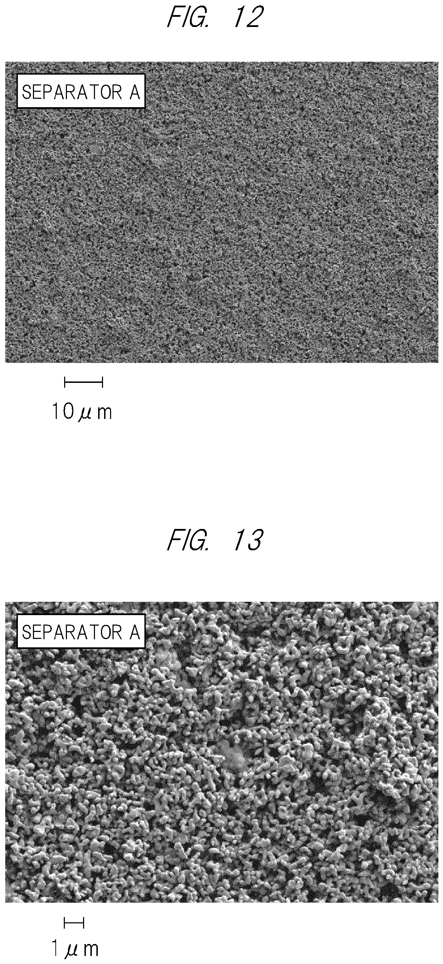

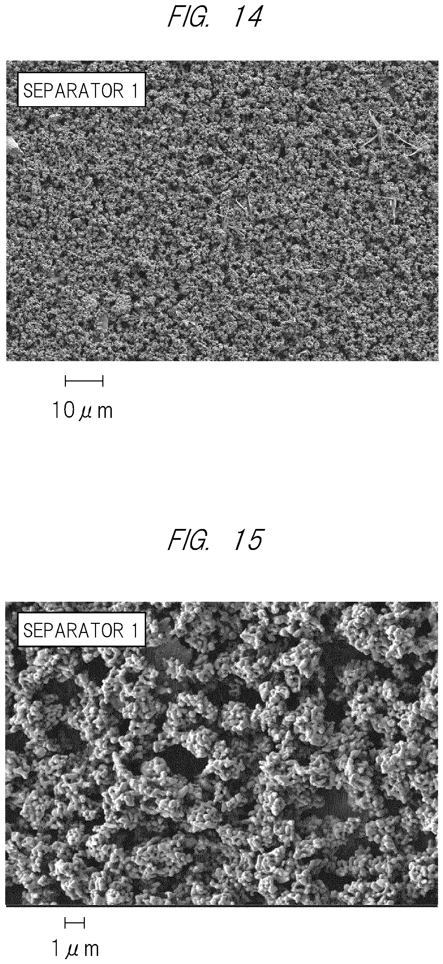

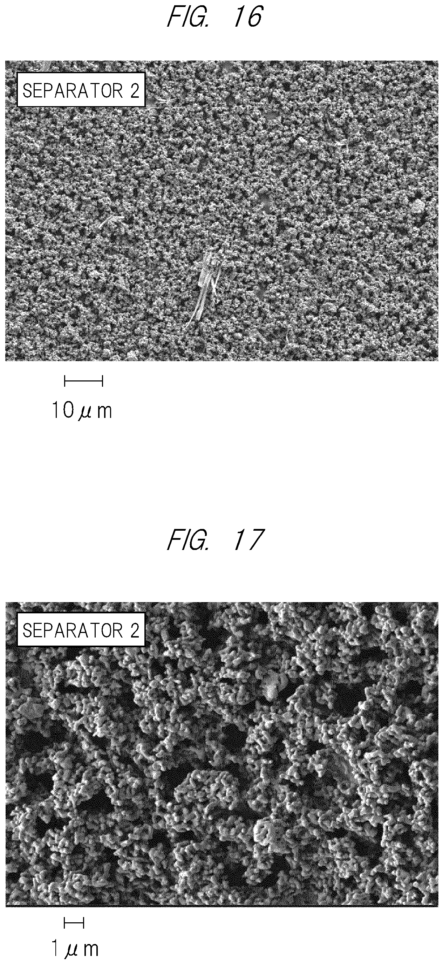

Each of FIGs. 12 to 17 is a diagram showing a SEM observation result. Each of FIGs. 12 and 13 shows a SEM photograph of the separator A, each of FIGs. 14 and 15 shows a SEM photograph of the separator 2, and each of FIGs. 16 and 17 shows a SEM photograph of the separator 1.

In comparison among FIGs. 12 to 17, particularly among FIGs. 13, 15 and 17, in the separator A (FIG. 13) using the coating liquid A imitating the commercialized product, the alumina particles were observed relatively homogeneously on its entire surface. On the other hand, in the separators 1 and 2 (FIGs. 15 and 17) using the coating liquid 1 and 2 with the addition of the liquid glass, the aggregate (agglomerate) of the alumina particles were observed. A particle diameter of the aggregate particle is about 1 to 5 um. In the SEM observation on the separator 1 using the coating liquid 1, note that the state of the cellulose was not allowed to be observed.

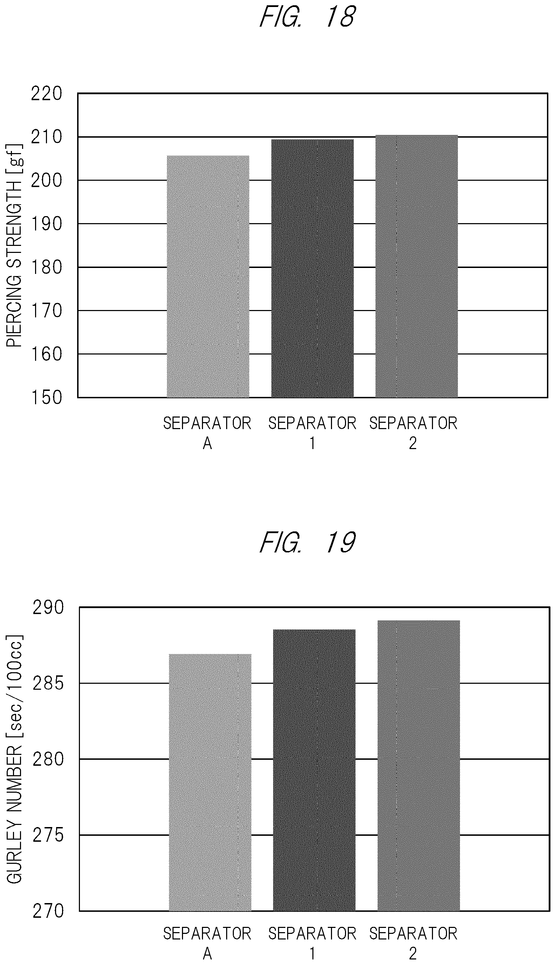

FIG. 18 is a graph showing a piercing test result of each of the porous films (separators) 1, 2 and A, and FIG. 19 is a graph showing a Gurley number of each of the porous films (separators) 1, 2 and A.

As shown in FIG. 18, it has been found out that the strength of each of the porous films (separators) 1 and 2 is higher than that of the separator A using the coating liquid imitating the commercialized product, and is acceptable. In other words, it has been found out that the strength is acceptable even in the addition of the liquid glass or others to the coating liquid. As shown in FIG. 19, in the comparison in the Gurley number with the separator A using the coating liquid imitating the commercialized product, it has been found out that the increase of the Gurley number is lower than 2% and is acceptable. In other words, it has been found out that air permeability is maintained without closing of the gaps (fine pores) among the base substance and the alumina particles even in the addition of the liquid glass or others to the coating liquid. And, it has been found out that the Gurley number is improved by the addition of the SA-treated CeNF.

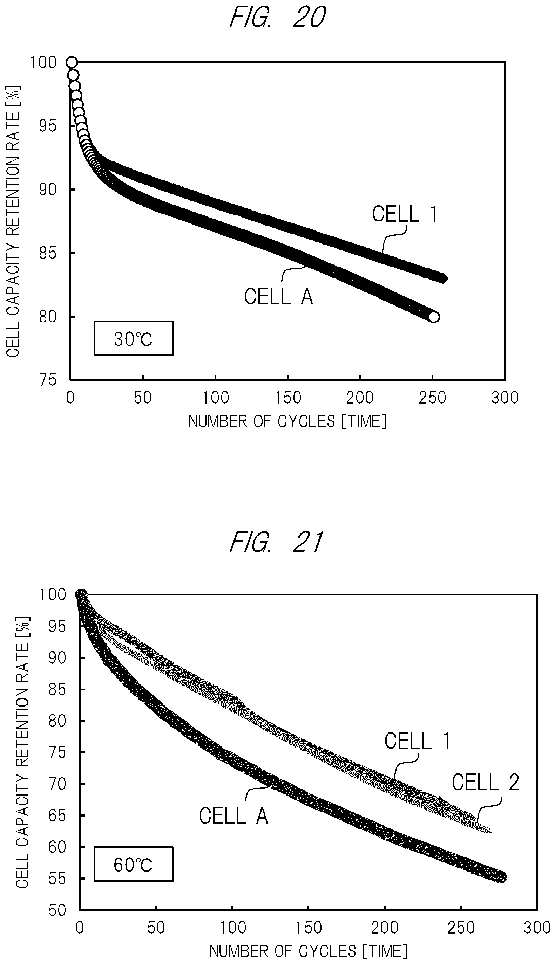

FIG. 20 is a diagram showing the cycle property at 30°C, and FIG. 21 is a diagram showing the cycle property at 60°C. In FIGs. 20 and 21, a horizontal axis represents the number of cycles (time), and a vertical axis represents a cell capacity retention rate (%).

As shown in FIGs. 20 and 21, the cell 1 shows the more favorable cell capacity retention rate than that of the cell A (comparative example A, imitating the commercialized coating liquid). And, regarding the cycle property at 60°C, the cell 2 shows the more favorable cell capacity retention rate than that of the cell A (comparative example A, imitating the commercialized coating liquid).

In the comparison between cells 1 and 2, it has been found out that the cell 1 is better in the cell capacity retention rate.

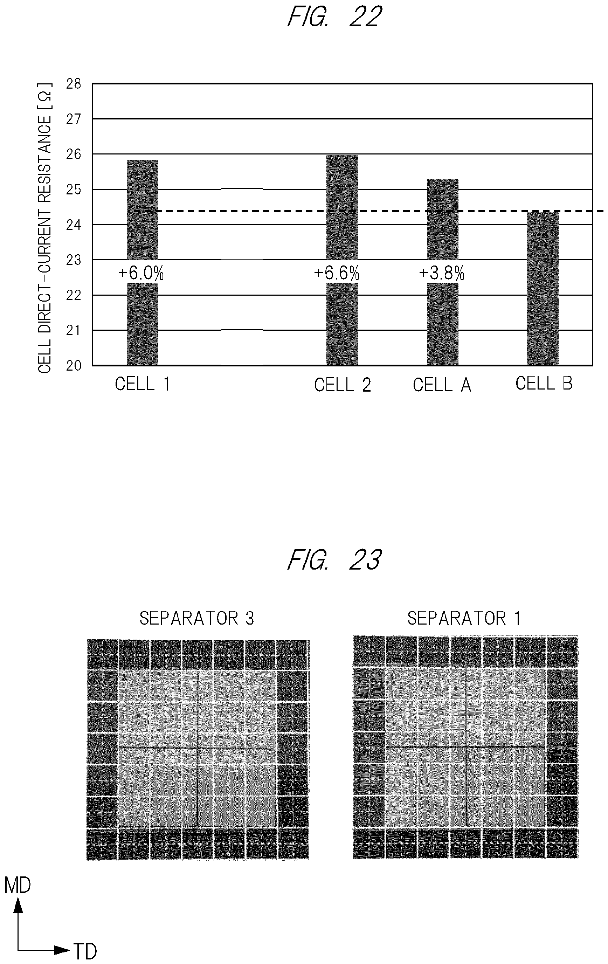

FIG. 22 is a diagram (graph) showing the cell resistance of each of the cells 1, 2, A and B. In FIG. 22, a vertical axis represents a cell direct-current resistance (Ω). As shown in FIG. 22, it has been found out that the cell resistance of each of the cells 1 and 2 is larger than the cell resistance of the cell B using the porous film (separator) with only the base substance not including the coating layer formed thereon but the cell resistance is within the allowable range even in the addition of the liquid glass or others to the coating liquid since its rising rate is within 10%.

As causes of such rising of the cell resistance, a cause 1) that is interruption of the movement of the Li ions because of the closing of the fine pores of the separator due to the addition of the liquid glass or others, a cause 2) that is decrease of an effective electrode area because of dissolution of the components of the coating liquid into the electrolyte solution to prevent the contact between the electrode and the electrolyte solution and others are exemplified. However, the rising of the cell resistance of each of the cells 1 and 2 is slight, and it is considerable that the problems as described in the causes 1) and 2) do not occur.

When the coating liquid 1 or 2 is used as the coating liquid for the separator as described above, the cell properties such as the thermal resistance and the cycle property can be improved.

### (Second Embodiment)

In the first embodiment, the SA-treated Ce was used as the second filler of the coating liquid. However, an oxidized cellulose such as a TEMPO oxidized cellulose having a structure with the carboxyl group resulted from oxidation of the primary hydroxyl group may be used. The TEMPO oxidized cellulose will be explained while being exemplified below.

The porous film of the present embodiment and the method of manufacturing the same will be explained below. The porous film of the present embodiment can be used as so-called separator of the cell.

### [Explanation for Structure]

The porous film according to the present embodiment includes a base substance (porous base substance) S and a coating film (coverage film) CF formed on a surface of the base substance S. The configuration of the porous film (FIG. 1) according to the present embodiment and the configurations of the lithium ion cell (FIGs. 2 and 3) using this porous film are the same as those of the first embodiment except in that the SA-treated Ce of the first embodiment is replaced with the TEMPO oxidized cellulose, and therefore, the detailed explanation will be omitted.

### [Explanation for Manufacturing Method]

In the following, steps of manufacturing the porous film of the present embodiment will be explained, and configurations of the porous film and the coating film will be more defined.

The steps of manufacturing the porous film of the present embodiment include the following steps.

### <<1: Step of Preparing Base Substance (Porous Film before Coating)>>

As the base substance S, a base substance that is available without particular limitation and that is particularly generally used in a porous film for a lithium ion cell is preferable, and a fine porous film is applicable. For example, a commercialized polyethylene fine porous film is applicable.

### <<2: Step of Preparing Coating Liquid>>

### 2-1) Preparation of First Filler

In the present embodiment, the inorganic particles (inorganic filler) are used as the first filler.

A type of the inorganic filler is not particularly limited. For example, the same material explained in the first embodiment, such as alumina, boehmite, aluminum hydroxide, nano silica, micro silica, carbon nanotube, talc, glass fiber or others is applicable.

### 2-2) Preparation of Second Filler

In the present embodiment, the TEMPO-treated cellulose is used as the second filler. The TEMPO treatment (TEMPO oxidation treatment)) is a treatment based on an oxidation reaction using TEMPO (2, 2, 6, 6,-tetramethyl piperidine 1-oxyl) as a catalyst. Therefore, the TEMPO-treated cellulose is often referred to as "TEMPO-oxidized cellulose".

The cellulose (Cell-OH) is a carbohydrate expressed by (C₁₂H₂₀O₁₀)ₙ, and is expressed by, for example, the above-described chemical formula (Chemical Formula 1).

When the TEMPO treatment is performed to the cellulose, "-OH" that is a primary hydroxyl group of the cellulose is regioselectively oxidized to be a C6-aldehyde group, and then, oxidized to be a C6-carboxyl group, and besides, is converted to a salt (carboxylate) of the C6-carboxyl group when being subjected to an alkaline treatment, for example, converted to a Na salt of the C6-carboxyl group as shown below when being subjected to an alkaline treatment using sodium hydroxide solution. 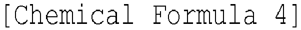 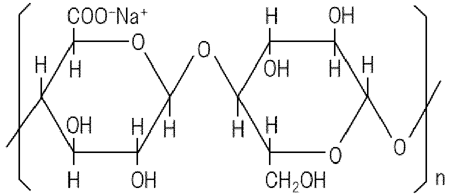 In a step (oxidation step) of introducing the carboxyl group to the hydroxyl group of the cellulose, for example, TEMPO or sodium bromide serving as the catalyst and hypochlorous acid serving as an oxidant are used, and those materials are reacted in water. When the reaction is conducted while adding a basic solution such as sodium hydroxide, an amount of which is allowed to maintain an optional pH, during the reaction, the TEMPO oxidation treated cellulose (the above-described Chemical Formula 5) can be provided.

In the TEMPO-treated cellulose (TEMPO-oxidized cellulose, TCe) as described above, the Na salt of the C6-carboxyl group is ionized in water, and therefore, a repulsive force (an electrostatic repulsive force, osmotic pressure) is exerted. Therefore, if the Na salt is densely arranged, dispersion in an extremely fine state is achieved. In the above-described chemical formula, note that a substituent of a carbon atom at a C6 position in only a left glucose residue of two glucose residues is illustrated as a COONa group. This is an example showing a case in which the cellulose has a structure, a part of which is oxidized to be a carboxyl group, and therefore, does not mean that the cellulose is made of only this structure unit. In other words, the chemical formula also includes a case with a structure in which the primary hydroxyl groups of both glucose residues are oxidized to the carboxyl groups and a case without the structure in which the primary hydroxyl groups of both glucose residues are oxidized to the carboxyl groups. The entire oxidized cellulose is only necessary to have the structure in which a part of the primary hydroxyl groups is oxidized to the carboxyl group. Further, regarding even the carboxyl groups, all the carboxyl groups are not necessarily converted to the Na salts, and the chemical formula also includes a case in which a part of the carboxyl groups is converted to the Na salt.

### (Fibrillating Process)

The TEMPO oxidized cellulose may be subjected to a fibrillating process to be miniaturized (nano-sized). The fibrillating process (miniaturizing process) includes a chemical process method, a mechanical process method and others. Combination of these methods may be used. By such a fibrillating process (miniaturizing process), a fine cellulose having, for example, a width (short diameter, shorter length) W that is equal to or smaller than 1000 nm and a length L that is equal to or smaller than 500 µm, more preferably the width W that is equal to or smaller than 500 nm and the length L that is equal to or smaller than 3 µm, can be provided in the liquid. Note that a cellulose having a width W of about 4 nm and a length L of about 2 um was also observed.

The miniaturization (nano-sizing) process for the cellulose as described above may be performed before or after the TEMPO oxidization treatment.

### 2-3) Preparation of Alkali Silicate

As the alkali silicate, liquid glass is preferably used as similar to the case of the first embodiment.

### 2-4) Preparation of Other Additives

As other additives, a thickener (such as carboxymethyl cellulose, xanthane gum, guar gum, alginic acid), a binder (such as acrylic resin, acrylic binder, fluorine resin), a dispersant (such as surfactant, alcohol) or others can be used as similar to the case of the first embodiment.

### B) Mixing Step (Agitating Process Step)

The coating liquid is prepared by addition of the inorganic particles (first filler) and other additives, and besides, the alkali silicate to the dispersant solution of the TEMPO oxidized cellulose (second filler), and then, agitation of these materials.

An addition amount of the TEMPO oxidized cellulose (second filler) is preferably equal to or more than 0.05 wt% with respect to the inorganic particles (first filler). An amount of the TEMPO oxidized cellulose is preferably equal to or more than 0.3 wt% and equal to or less than 8 wt% with respect to the total amount of the solid components of the coating liquid, and more preferably equal to or more than 0.5 wt% and equal to or less than 5 wt%.

An addition amount of the alkali silicate is preferably equal to or more than 0.05 wt% with respect to the inorganic particles (first filler). An amount of the alkali silicate is preferably equal to or more than 0.3 wt% and equal to or less than 12.5 wt% with respect to the total amount of the solid components of the coating liquid, and more preferably equal to or more than 0.5 wt% and equal to or less than 10 wt% with respect to the same.

As a method of the agitation, for example, a method of rotating a blade attached to a shaft by a motor or others, an oscillation method using ultrasonic wave or others is applicable. Note that the coating liquid may be prepared (mixed, agitated) under a reduced pressure in order to reduce inclusion of bubbles into the coating liquid.

### <<Step of Coating Base Substance>>

The surface of the base substance S explained in the chapter <<1: Step of Preparing Base Substance (Porous Film before Coating)>> is coated with the coating liquid. The coating method is not limited. For example, a bar coater, a lip coater, a gravure coater, a die coater, a spray coater, a screen coater and others are applicable. By the drying of the coating liquid after the coating, the coating film can be formed on the surface of the base substance S.

A method for drying the coating liquid is not particularly limited if the method can remove the solvent or the dispersant solution contained in the coating liquid. However, a method of a heating process at a temperature that is, for example, equal to or higher than 50°C and equal to or lower than 250°C, can be exemplified. The method can be performed in retention time of 0.1 to 50 hours as time for the above-described heating process. As environment in the drying, ambient atmosphere, vacuum atmosphere, rare-gas atmosphere, nitrogen atmosphere, carbon dioxide atmosphere, hydrogen atmosphere and others can be exemplified. However, when the environment contains carbon dioxide, the alkali silicate and the carbon dioxide react with each other to generate a carbonate compound (A₂CO₃) or a hydrogen carbonate compound (AHCO₃) (A = at least one element selected from Li, K, Rb, Ba, Ca, Mg and Sr). Therefore, when the environment contains the carbon dioxide, the carbonate compound (A₂CO₃) or the hydrogen carbonate compound (AHCO₃) (A = at least one element selected from Li, K, Rb, Ba, Ca, Mg and Sr) can be contained in the alkali silicate contained in the coating liquid.

Such A₂CO₃ or AHCO₃ has low dissolubility in water, and has a feature of being decomposed and releasing out the carbon dioxide at a voltage exceeding 4.6 V. In other words, when the coating film contains such A₂CO₃ or AHCO₃, the coating film is difficult to absorb moisture, and can have a function of the releasing out of the carbon dioxide at overcharge.

A content of such A₂CO₃ or AHCO₃ is preferably equal to or more than 1 wt% and equal to or less than 50 wt% with respect to the coating film. In order to adjust the content within this range, an environmental pressure may be an absolute pressure of 0.001 to 100 MPa while a concentration of the carbon dioxide may be equal to or more than 400 ppm although varying depending on the heating process temperature and the heating process time. Preferably, the environmental pressure is 0.01 to 50 MPa while the concentration of the carbon dioxide is equal to or more than 1000 ppm. More preferably, the environmental pressure is 0.1 to 10 MPa while the concentration of the carbon dioxide is equal to or more than 2000 ppm.

When the alkali silicate mixed with the powder of A₂CO₃ or AHCO₃ is previously used for the coating liquid, the heating process step under the environment containing the carbon dioxide can be excluded. However, it is preferable to cause the alkali silicate to absorb the carbon dioxide to generate the A₂CO₃ or AHCO₃ because the moisture absorption performance of the coating film can be significantly decreased. The coating film having the high moisture absorption performance absorbs the moisture in the air, and often decreases the cell performance.

When the coating liquid contains the cellulose as the second filler, the A₂CO₃ or AHCO₃ can be homogeneously generated. The homogeneousness is more improved particularly in the cellulose in which the hydrophilic group is substituted with the hydrophobic group or the TEMPO-treated cellulose. When the A₂CO₃ or AHCO₃ homogeneously exists in the coating film, the moisture absorption performance is improved, and the function of the releasing out of the carbon dioxide at the overcharge can be homogeneously provided.

As described above, according to the present embodiment, by the addition of the filler and the alkali silicate to the coating liquid, the mechanical strength and the thermal resistance of the porous film (separator) can be improved while the electrical properties (the output property and the cycle property (lifetime)) of the cell are improved.

A working example of the coating liquid, the porous film (separator) and the cell using them according to the present embodiment will be explained below.

### [Working Example B]

### 1: Step of Preparing Base Substance (Porous Film before Coating)

As the base substance S, for example, the commercialized polyethylene fine porous film (produced by CS Technology Co., Ltd., the average pore diameter: 0.06 um, the thickness: 16 um) was used.

### 2: Step of Preparing Coating Liquid

### A) Preparation of Liquid Glass

The liquid glass was the aqueous solution of the alkali silicate as described above. In the present working example, Na₂O·3SiO₂ (ESX-2 produced by ADEKA corporation)) was used.

### B) Preparation of TEMPO Oxidized Cellulose

The TEMPO oxidized cellulose (Na salt) was prepared. As this TEMPO oxidized cellulose, a powder material having an average particle diameter of about 10 um manufactured by using a pulp as a raw material derived from a broad-leaf tree was used.

### C) Agitating Process

The carboxymethyl cellulose (CMC), the acrylic resin (binder) and octyl phenol ethoxylate (triton X) serving as the surfactant were added to the dispersant solution of the TEMPO-oxidized cellulose, and then, high purity alumina (having the average grain diameter of 670 nm, produced by SUMITOMO CHEMICAL COMPANY, LIMITED.) was further introduced. Note that the aqueous solvent was further added as the solvent to prepare the mixture liquid. This mixture liquid was agitated at 2000 rpm for 30 minutes by a planetary centrifugal mixer (ARE310 produced by THINKY CORPORATION), and then, the liquid glass (sodium silicate) was added at the end, and these materials were agitated at 25 m/s for 1 minute by a thin-film spin system high-speed mixer (FILMIX produced by Primix corporation) to provide the coating liquid. Regarding the coating liquid, a table 2 shows a solid-component ratio of each coating liquid provided when a ratio of the solid components (cellulose, CMC, binder, surfactant, alumina and liquid glass (sodium silicate)) is 100 wt%. Note that the surfactant was added so that the solution having the solid components of 10 wt% has the above-describe ratio. Besides, as a comparative example A, coating liquid (imitating the commercialized product) without the addition of the liquid glass (sodium silicate) and the dispersant solution of the TEMP-oxidized celulose was also formed.

**[Table 2]**

| | Sample 3 | Sample 4 | Sample 5 | Sample 6 | Sample 7 | Sample 8 | Comparative example A | Comparative example B |
|---|---|---|---|---|---|---|---|---|
| | Coating liquid 3 | Coating liquid 4 | Coating liquid 5 | Coating liquid 6 | Coating liquid 7 | Coating liquid 8 | Coating liquid A | - |
| Al₂O₃ (700nm) | 85 wt.% | 80 wt.% | 90 wt.% | 93.4 wt.% | 93.4 wt.% | 93.4 wt.% | 93.4 wt.% | - |
| CMC | 0.7 wt.% | 0.7 wt.% | 0.7 wt.% | 2.78 wt.% | 2.78 wt.% | 2.78 wt.% | 3.71 wt.% | - |
| TCeNF | 0.93 wt.% | 0.93 wt.% | 0.93 wt.% | 0.93 wt.% | 0.93 wt.% | 0.93 wt.% | 0 wt.% | - |
| Acrylic resin | 2.8 wt.% | 2.8 wt.% | 2.8 wt.% | 2.8 wt.% | 1.4 wt.% | 0.7 wt.% | 2.8 wt.% | - |
| Triton X | 0.1 wt.% | 0.1 wt.% | 0.1 wt.% | 0.1 wt.% | 0.1 wt.% | 0.1 wt.% | 0.1 wt.% | - |
| Liquid glass | 10.5 wt.% | 15.5 wt.% | 5.5 wt.% | 0 wt.% | 1.4 wt.% | 2.1 wt.% | 0 wt.% | - |
| Separator | Separator 3 | - | Separator 5 | Separator 6 | - | - | Separator A | Uncoated separator |
| Cell | Cell 3 | - | Cell 5 | Cell 6 | - | - | Cell A | Cell B |

In the present working example, more that the ratio (concentration) of the solid components (cellulose, CMC, binder, surfactant, alumina and liquid glass) to the solvent was 45 wt%. However, this ratio (concentration) can be adjusted in a range of about 20 wt% to 60 wt%.

### 3: Step of Coating Base Substance (Step of Preparing Separator)

The coating liquid (any of the coating liquid 3, 4, 5, 6, 7 and 8) was applied on both-side surfaces of the base substance (PE porous film) explained in the chapter "1. Step of Preparing Base Substance (Porous Film before Coating)" by the bar coater, and the coating film was dried at 80°C for 1 hour. Note that the coating thickness was set to 4 um on one-side surface (8 um on both-side surfaces). The porous films (separators) 3, 4, 5, 6, 7 and 8 each including the coating layer formed thereon was formed as described above (see the table 2).

### 4: Evaluation of Coating Liquid and Separator

### (Coatability)

In the coating liquid 4, the coating liquid was solidified, and the bar coater stopped, and therefore, the manufacturing of the porous film (separator) and the cell was relinquished. In the coating liquid 7 and 8, the coating liquid was not wetly expanded (in other words, the cissing was caused) on the surface of the base substance, and therefore, the manufacturing of the porous film (separator) and the cell was relinquished. In other coating liquid, the solidification of the coating liquid and the defects such as the cissing on the base substance were not observed, and the coatability was good. Note that the comparative examples A and B were the same as those explained in the first embodiment (working example A).

### (Thermal Shrinkage Test 2)

The porous film (separator) 3 was let stand inside a vacuum dryer machine at 300°C for 1 hour. States of the film before and after the application of the thermal load were observed. Note that the base substance (PE porous film) used for the coating was a dry separator manufactured by uniaxial drawing, and therefore, the thermal shrinkage rate was calculated based on the dimension change in a machine direction (MD direction). A thermal shrinkage rate in a case of failure to measure the dimension because of melting of the film was set to 100%.

### 5: Manufacturing and Evaluation of Cell

As similar to the case of the working example A of the first embodiment, the cell (cell 3, 5 and 6) was manufactured, and its cycle property and cell resistance were evaluated.

### 6: Result

FIG. 23 is a diagram showing a result of the thermal shrinkage test 2. As shown in FIG. 23, in the separator 3 using the coating liquid 3 with the addition of the liquid glass and the TEMPO-oxidized cellulose, the thermal shrinkage rate was 0.5%, and therefore, it has been found out that the thermal resistance is high. And, it has been found out that this separator 3 has the thermal resistance that is not inferior to the thermal resistance of the separator 1 in the thermal shrinkage test 2.

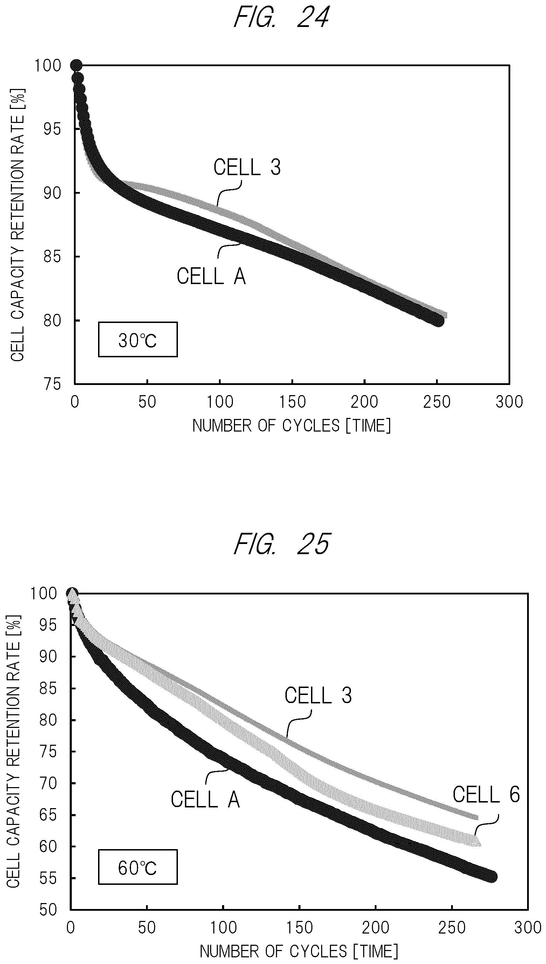

FIG. 24 is a diagram showing the cycle property at 30°C, and FIG. 25 is a diagram showing the cycle property at 60°C. In FIGs. 24 and 25, a horizontal axis represents the number of cycles (time), and a vertical axis represents a cell capacity retention rate (%).

As shown in FIGs. 24 and 25, the cell 3 shows the more favorable cell capacity retention rate than that of the cell A (comparative example A, imitating the commercialized coating liquid). And, the cell 3 shows the more favorable cell capacity retention rate than that of the cell 6 without the addition of the liquid glass.

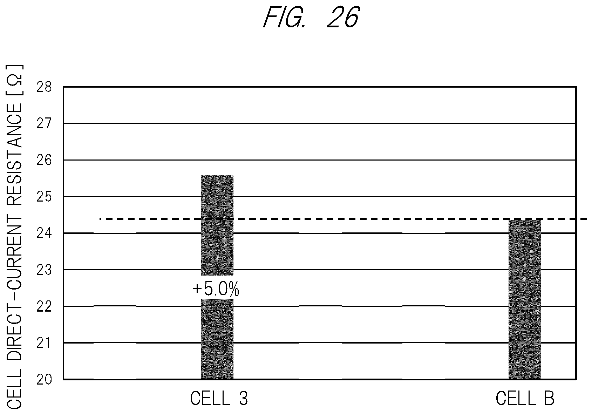

FIG. 26 is a diagram (graph) showing the cell resistance of each of the cells 3 and B. In FIG. 26, a vertical axis represents a cell direct-current resistance (Ω). As shown in FIG. 26, it has been found out that the cell resistance of the cell 3 is larger than the cell resistance of the cell B using the porous film (separator) with only the base substance not including the coating layer formed thereon but the cell resistance is within the allowable range even in the addition of the liquid glass or others to the coating liquid since its rising rate is within 10%.

As causes of such rising of the cell resistance, a cause 1) that is interruption of the movement of the Li ions because of the closing of the fine pores of the separator due to the addition of the liquid glass or others, a cause 2) that is decrease of an effective electrode area because of dissolution of the components of the coating liquid into the electrolyte solution to prevent the contact between the electrode and the electrolyte solution and others are exemplified. However, the rising of the cell resistance of each of the cells 1 and 2 is slight, and it is considerable that the problems as described in the causes 1) and 2) do not occur.

When the coating liquid 3 is used as the coating liquid for the separator as described above, the cell properties such as the thermal resistance and the cycle property can be improved.

### (Summary)

As a result of the working example, the addition amount of the liquid glass needs to be less than 15.5 wt% with respect to the total amount of the solid components of the coating film or the coating liquid in the viewpoint of the coatability, and is preferably equal to or less than 10.5 wt%. And, the addition amount of the liquid glass needs to be less than 19.4 wt% with respect to the amount of the inorganic particles of the coating film or the coating liquid in the viewpoint of the coatability and the cost, and is preferably equal to or less than 12.4 wt%. It is considerable that the addition amount of the liquid glass hardly depends on the presence/absence of the addition of the cellulose and the type of the added cellulose.

And, as a result of the working example and other experiments, the addition amount of the cellulose is preferably 0.1 wt% to 5 wt% with respect to the total amount of the solid components of the coating film or the coating liquid.

And, as a result of the working examples A and B, the thermal shrinkage rate can be suppressed to be equal to or less than 5%, preferably equal to or less than 3%, by using the coating liquid.

And, the viscosity of the coating liquid can be improved by adding the liquid glass, and therefore, the addition amount of the CMC playing the role of the thickener can be reduced to be, for example, equal to or less than 3 wt% with respect to the total amount of the solid components of the coating film or the coating liquid. Particularly, since the CMC is water-soluble and contains the Na ion, the reduction of the addition amount of the CMC is preferable in order to suppress the reduction of the cell performance.

### (Third Embodiment)

In the working examples of the first and second embodiments, the commercialized polyethylene fine porous film was used as the base substance S. The polyethylene fine porous film can be formed as described below.

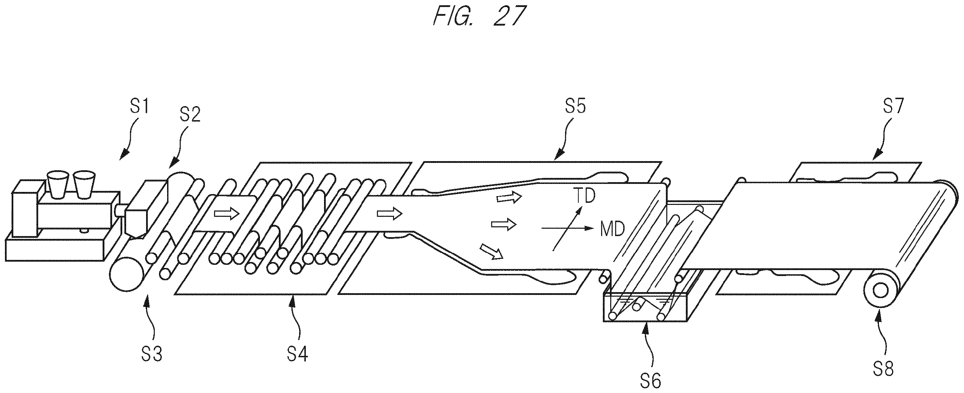

FIG. 27 is a schematic view showing a configuration of a manufacturing apparatus of the present embodiment. In the present embodiment, steps of manufacturing the separator by using the manufacturing apparatus will be explained.

For example, a plasticizer (liquid paraffin) and polyolefin (such as polyethylene) are introduced to a raw-material feeder of a twin-screw kneader/extruder (S1) in FIG. 27, and the plasticizer and the polyolefin are mixed and kneaded in a kneader unit. A kneading condition is, for example, at 180°C for 12 minutes, and a rotation speed of the shaft is 100 rpm.

The kneading material (molten resin) is transported from a discharge port to a T-die S2, and the molten resin is cooled in an original-fabric cooling machine S3 while being extruded from a slit of the T-die S2. As a result, a thin-film resin composite is formed.

Then, the thin-film resin composite is drawn in a longitudinal direction by a first longitudinally-drawing machine S4, and besides, is drawn in a transverse direction by a first transversely-drawing machine S5.

Then, the drawn thin film is soaked into organic solvent (such as methylene chloride) in an extraction bath S6. In the drawn thin film, the plasticizer (paraffin) and the polyolefin (such as polyethylene) are in a phase separation state. Specifically, the plasticizer (paraffin) is arranged in a nano-sized island state. The nano-sized plasticizer (paraffin) is removed (degreased) by the organic solvent (such as methylene chloride) in the extraction bath S6. As a result, the porous thin film can be formed.

Then, this thin film is dried while being further drawn in the transverse direction by a second transversely-drawing machine S7, and thermal fixation is performed thereto for moderating an internal stress at the time of the drawing. Then, the thin film transported from the second transversely-drawing machine S7 is wound up by a winder machine S8.

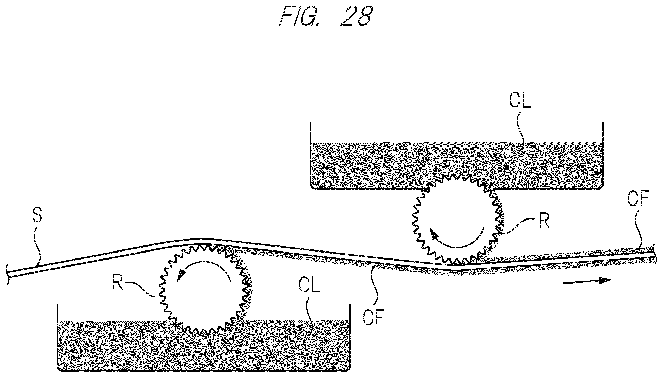

In this manner, the porous film (that is the base substance of the first embodiment) can be manufactured. In this case, for example, a gravure coating machine (S7') shown in FIG. 28 is inserted between the second transversely-drawing machine S7 and the winder machine S8. FIG. 28 is a cross-sectional view schematically showing a configuration of the gravure coating machine. This gravure coating machine includes two gravure rolls R. Each of the gravure rolls R has, for example, a plurality of oblique dents, and the gravure rolls are rotated while a part of the dents is soaked into the coating liquid CL. As a result, the base substance S is coated with the coating liquid CL in a state in which the coating liquid is held in the oblique (radial) dents.

When the coating liquid CL explained in the first embodiment is used as this coating liquid CL, the coating film can be formed on both surfaces of the base substance. Note that a drying machine for the coating liquid can be appropriately inserted if needed.

In the manner, the separator having the high performance can be efficiently manufactured by using the machines shown in FIGs. 27 and 28.

As described above, the film (thin film) is formed by melting and kneading polyolefin (resin) and a plasticizer by using a kneader, extruding these materials to be sheeted by using an extruder, and then, drawing the mixture by using a press machine or a drawing machine.

As this polyolefin, polyolefin that can be processed by general extrusion, injection, inflation, blow molding or others is used. As this polyolefin, for example, homopolymer, copolymer or multi-component copolymer of ethylene, propylene, 1-butene, 4-methyl-1-pentene, 1-hexene, 1-octene and others is applicable. Alternatively, single use or combination use of polyolefin selected from a group of the homopolymer, the copolymer and the multi-component copolymer is also applicable. As a typical example of the polymer, low-density polyethylene, linear low-density polyethylene, middle-density polyethylene, high-density polyethylene, ultra-high molecular weight polyethylene, isotactic polypropylene, atactic polypropylene, ethylenepropylene random copolymer, polybutene, ethylene propylene rubber and others are exemplified.

As the base substance S, note that a resin particularly containing polyethylene as a main component is preferably used because of having required performances of a high melting point and high strength. And, in a viewpoint of the shutdown performance and others, an occupancy of the polyethylene is preferably equal to or more than 50 wt% of the resin component. In a case of usage of the ultra-high molecular weight polyolefin having a molecular weight that is equal to or more than one million, a content of the ultra-high molecular weight polyolefin is preferably equal to or less than 50 parts by mass per 100 parts by mass of the mixture (including the resin and the dispersant solution) since the content of the ultra-high molecular weight polyolefin exceeding 50 parts by mass makes the homogeneous kneading difficult.

The plasticizer is used to improve flexibility and weather resistance when being added to a thermoplastic resin. Further, in the present embodiment, pores can be formed in a resin composite (film) by a later-described degreasing process to remove the plasticizer.

As the plasticizer, organic solvent having a molecular weight of 100 to 1500 and a boiling point of 50 to 300°C is applicable. Specifically, one or more types of mixture of liquid paraffin, chain or cyclic aliphatic hydrocarbons of nonane, decane, decalin, paraxylene, undecane and dodecane, petroleum fractions having a boiling point corresponding to these materials, and phthalic esters that are liquid at a room temperature such as dibutyl phthalate and dioctyl phthalate is applicable. Alternatively, one or more types of mixture of alcohols such as ethanol and methanol, nitrogen-based organic solvent such as NMP (N-methyl-2-pyrrolidone) and dimethyl acetamide, ketones such as acetone and methyl ethyl ketone, and esters such as ethyl acetate and butyl acetate is applicable.

In the film (thin film) resulted from the drawing of the sheeted mixture, the polyolefin and the plasticizer are in the phase separation state. Specifically, the plasticizer is arranged in the nano-sized island form. When the nano-sized plasticizer is removed by a later-described organic-solvent treatment step, the island-form plasticizer becomes the pores, and the porous thin film is formed. A step of forming the separator including a lot of fine pores formed in a resin composite by the step of removing the plasticizer is called "wet method".

For example, when the film (thin film) formed by the drawing step is soaked into organic solvent, the plasticizer in the film is extracted into the organic solvent to be removed from the film (thin film).

As the organic solvent, methylene chloride, hexane, octane, cyclohexane or others is applicable. Among these materials, methylene chloride is preferably used in a viewpoint of processability.

Then, the organic solvent on the surface of the film (thin film) is volatilized, and is subjected to a heating process (heating fixation) if needed, and the base substance (fine porous film) S can be provided.

### (Application Example)

In the above-described explanation, note that the Na salt of the C6-carboxyl group expressed by the (Chemical formula 4) is exemplified. However, a chemical compound having another counter ion (X⁺) as shown below may be used as the cellulose. This counter ion is preferably an alkali metal ion, and, for example, "K⁺" or others is exemplified.

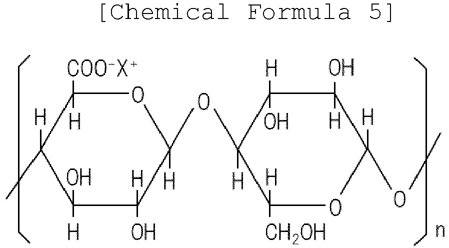

As a raw material of the cellulose, a material derived from a fiber of plant such as pulp or a material derived from a fiber of animal such as sea squirt may be used.

### (Fourth Embodiment)

In the first and second embodiments, the second filler is used. However, the second filler is not always needed if the dry step is in the environment containing the carbon dioxide.

A porous film according to the present embodiment and a method of manufacturing the same will be explained below. The porous film according to the present embodiment can be used as so-called separator of a cell.

### [Explanation for Structure]

The porous film according to the present embodiment includes a base substance (porous base substance) S and a coating film (coverage film) CF formed on a surface of the base substance S. In this case, a configuration of the porous film according to the present embodiment (FIG. 1) and a configuration of a lithium ion cell using this the porous film (FIGs. 2 and 3) are the same as those of the first embodiment except for including A₂CO₃ or AHCO₃ (A = Li, Na, K, Rb) in place of the SA-treated Ce in the case of the first embodiment, and therefore, the repetitive explanation thereof will be omitted.

### [Explanation for Manufacturing Method]

In the following, steps of manufacturing the porous film of the present embodiment will be explained, and configurations of the porous film and the coating film will be defined.

The steps of manufacturing the porous film of the present embodiment include the following steps.

### <<1: Step of Preparing Base Substance (Porous Film before Coating)>>

As the base substance S, a base substance that is available without particular limitation and that is particularly generally used in a porous film for a lithium ion cell is preferable, and a fine porous film is applicable. For example, commercialized polyethylene fine porous film or polypropylene fine porous film is applicable.

### <<2: Step of Preparing Coating Liquid>>

### 2-1) Preparation of First Filler

In the present embodiment, the inorganic particles (inorganic filler) are used as the first filler.

A type of the inorganic filler is not particularly limited. For example, a material explained in the first embodiment such as alumina, boehmite, aluminum hydroxide, nano silica, micro silica, carbon nanotube, talc, glass fiber or others is applicable.

### 2-2) Preparation of Second Filler

In the present embodiment, the second filler is not used.

### 2-3) Preparation of Alkali Silicate

As the alkali silicate, the liquid glass is preferably used as similar to the case of the first embodiment.

### 2-4) Preparation of Other Additives

As other additives, as similar to the case of the first embodiment, a thickener (such as carboxymethyl cellulose, xanthane gum, guar gum, alginic acid), a binder (such as acrylic resin, acrylic binder, fluorine resin), a dispersant (such as surfactant, alcohol) or others may be used.

### B) Mixing Step (Agitating Process Step)

The coating liquid is prepared by addition of the inorganic particles (first filler) and additives such as the surfactant and the acrylic binder if needed, and besides, the alkali silicate, and then, agitation of these materials.

An addition amount of the alkali silicate is preferably equal to or more than 0.05 wt% with respect to the inorganic particles (first filler). And, an amount of the alkali silicate is preferably equal to or more than 0.3 wt% and equal to or less than 5 wt% with respect to the total amount of the solid components of the coating liquid, more preferably equal to or more than 0.5 wt% and equal to or less than 1.5 wt% with respect to the total amount of the solid components of the coating liquid.

As a method of the agitation, a method of rotating a blade attached to a shaft by a motor or others, an oscillation method using ultrasonic wave or others is applicable. Note that the coating liquid may be prepared (mixed, agitated) under a reduced pressure in order to reduce inclusion of bubbles into the coating liquid.

### <<3: Step of Coating Base Substance>>

The surface of the base substance S explained in the chapter <<1: Step of Preparing Base Substance (Porous Film before Coating)>> is coated with the coating liquid. The coating method is not limited. For example, a bar coater, a lip coater, a gravure coater, a die coater, a spray coater, a screen coater and others are applicable. By the drying of the coating liquid under the environment containing the carbon dioxide after the coating, the coating film can be formed on the surface of the base substance S.

In the present embodiment, the second filler as described in the first and second embodiments is not included. Therefore, when being dried under the environment not containing the carbon dioxide, the coating film CF tends to close the fine pores of the base substance S, and the Gurley number (air permeability [sec/100 cc]) of the base substance S (porous film, separator) on which the coating film CF is formed tends to be equal to or larger than 3500 meaning bad air permeability (for example, a Gurley number in a case of drying under argon environment was 3504 sec/100 cc) . Therefore, the drying environment needs to be the environment containing the carbon dioxide. In the drying under the environment containing the carbon dioxide, the alkali silicate and the carbon dioxide react with each other to produce a carbonate compound (A₂CO₃) or a hydrogen carbonate compound (AHCO₃) (A = at least one element selected from Li, K, Rb, Ba, Ca, Mg and Sr) and silicate (SiO₂). Because of the produced A₂CO₃ or AHCO₃ and SiO₂, the coating film CF is not formed to cover all the fine pores of the base substance S, and the Gurley number (air permeability [sec/100 cc]) of the base substance S (porous film, separator) on which the coating film CF is formed is equal to or larger than 200 and equal to or smaller than 3000 meaning that the air permeability can be secured.

As described above, according to the present embodiment, by the addition of the first filler and the alkali silicate without the second filler to the coating liquid after the coating because of the drying under the environment containing the carbon dioxide, the mechanical strength and the thermal resistance of the porous film (separator) can be improved while the electrical properties (an output property and a cycle property (lifetime)) of the cell are improved.

A working example of the coating liquid, the porous film (separator) and the cell using them according to the present embodiment will be explained below.

### [Working Example C]

### 1: Step of Preparing Base Substance (Porous Film before Coating)

As the base substance S, for example, the commercialized polyethylene fine porous film (produced by CS Technology Co., Ltd., the average pore diameter: 0.06 um, the thickness: 16 um) was used.

### 2: Step of Preparing Coating Liquid

### A) Preparation of Liquid Glass

The liquid glass is the aqueous solution of the alkali silicate as described above. In the present working example, mixture of the Li₂O·3.5SiO₂ (Lithium Silicate 35 produced by Nippon Chemical Industrial Co., Ltd.) and the Na₂O·3SiO₂ (ESX-2 produced by ADEKA corporation) at a mass ratio of 1 : 1 in a solid form was used.

### B) Agitating Process

The acrylic resin (binder) and octyl phenol ethoxylate (triton X) serving as the surfactant were added to, and then, high purity alumina (having the average grain diameter of 700 nm, produced by SUMITOMO CHEMICAL COMPANY, LIMITED.) was further introduced to the water in which the carboxymethyl cellulose (CMC) was dissolved. Note that the aqueous solvent was further added as the solvent to prepare the mixture liquid. This mixture liquid was agitated at 2000 rpm for 30 minutes by a planetary centrifugal mixer (ARE310 produced by THINKY CORPORATION), and then, the liquid glass (mixture liquid of lithium silicate and sodium silicate) was added at the end, and these materials were agitated at 25 m/s for 1 minute by a thin-film spin system highspeed mixer (FILMIX produced by Primix corporation) to provide the coating liquid. Regarding the coating liquid, when a ratio of the solid components (CMC, binder, surfactant, alumina and liquid glass (lithium silicate + sodium silicate)) is 100 wt%, note that the CMC was 0.9 wt%, the binder was 3 wt%, the surfactant was 0.1 wt%, the alumina was 85 wt%, and the liquid glass (lithium silicate + sodium silicate) was 11 wt%. Note that the surfactant was added so that the solution having the solid components of 10 wt% has the above-describe ratio.

In the present working example, note that the ratio (concentration) of the solid components (CMC, binder, surfactant, alumina and liquid glass) to the solvent was 45 wt%. This ratio (concentration) can be adjusted in a range of about 15 wt% to 65 wt%.

### 3: Step of Coating Base Substance (Step of Preparing Separator)

The above-described coating liquid was applied by a gravure roll onto both-side surfaces of the base substance (PE porous film) explained in the chapter "1. Step of Preparing Base Substance (Porous Film before Coating)", and the base substance was dried at 80°C for 1 hour under the carbon dioxide atmosphere of 0.1 MPa. Note that the coating thickness on the one-side surface was set to 4 um (8 um on the both-side surfaces). The porous film (separator) having the coating layer formed thereon was formed.

### 4: Evaluation of Coating Liquid and Separator

### (Coatability)

In the present coating liquid, defects such as the solidification of the coating liquid and the cissing on the base substance were not observed, and the coatability was good.

### 5: Gurley Number of Separator

In the porous film (separator), time taken for completion of passage of the air of 100 ml was measured, and was set as the Gurley number. The number N of samples (that is the number of sample pieces) for the Gurley number was set to 5, and an average value of these values was acquired.

### 6: Result

The Gurley number was 289 sec/100 cc meaning that the air permeability is secured.

### (Summary)

As a result of the working example, in the case without the usage of the second filler, by the drying (heating process) of the separator under the environment containing the carbon dioxide, the Gurley number that is equal to or larger than 200 and equal to or smaller than 3000 can be provided. It is considerable that a reason for this is that the drying under the environment containing the carbon dioxide makes the reaction between the alkali silicate and the carbon dioxide to produce the A₂CO₃ or the AHCO₃ and the SiO₂. It is considerable that the coating film CF is not formed to cover all the fine pores of the base substance S because of the produced A₂CO₃ or AHCO₃ and SiO₂. In the above description, the lithium ion cell has been exemplified. However, a lithium metal cell, a lithium polymer cell, an air lithium cell and others may be also applicable. Alternatively, the invention may be applied to a separator of a non-aqueous electrolyte secondary cell such as a sodium-ion cell, a potassium-ion cell, a calcium-ion cell, a magnesium-ion cell or an aluminum-ion cell. These cells mean a cell system in which an ion (carrier) acting for the electric conduction is replaced with a cation such as sodium, potassium, calcium, magnesium or aluminum.

In the foregoing, the invention made by the present inventors has been concretely described on the basis of the embodiments and the working examples. However, it is needless to say that the present invention is not limited to the foregoing embodiments or the working examples, and various modifications can be made within the scope of the present invention.

### EXPLANATION OF REFERENCE CHARACTERS

- 1: positive electrode
- 1M: positive electrode mixture layer
- 1S: current collector
- 2: negative electrode
- 2M: negative electrode mixture layer
- 2S: current collector
- 6: can (cell can)
- 7: cap (cell cap)
- 8: washer
- CF: coating film
- CL: coating liquid
- R: gravure roll
- S: base substance
- S1: twin-screw kneader/extruder
- S2: die
- S3: original-fabric cooling machine
- S4: first longitudinally-drawing machine
- S5: first transversely-drawing machine
- S6: extraction bath
- S7: second transversely-drawing machine
- S7': gravure coating machine
- S8: winder
- SP: separator

## Claims

1. Coating liquid for a porous film including alkali silicate and a first filler,
wherein the first filler is made of inorganic particles, and
a content of the alkali silicate is equal to or more than 0.05 weight% with respect to the inorganic particles.

2. The coating liquid according to claim 1,
wherein the inorganic particle is a material selected from nano silica, micro silica, carbon nanotube, talc, alumina, boehmite, aluminum hydroxide and glass fiber.

3. The coating liquid according to claim 2 further comprising
a second filler, a content of which is equal to or more than 0.05 weight% with respect to the inorganic particles,
wherein, in the second filler, a hydrophilic group of a cellulose is substituted with a hydrophobic group.

4. The coating liquid according to claim 2 further comprising
a second filler, a content of which is equal to or more than 0.05 weight% with respect to the inorganic particles,
wherein the second filler is a TEMPO-oxidized cellulose described below.

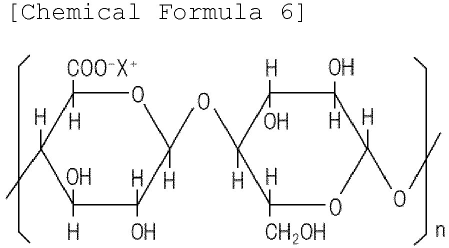

5. The coating liquid according to claim 3,
wherein a content of the second filler is equal to or less than 12.4 weight% with respect to the inorganic particles.

6. A porous film including a porous base substance and a coating film formed on a surface of the porous base substance,
wherein the coating film includes:
alkali silicate; and
a first filler,
the first filler is made of inorganic particles, and
a content of the alkali silicate is equal to or more than 0.05 weight% with respect to the inorganic particles.

7. The porous film according to claim 6,
wherein the inorganic particle is a material selected from nano silica, carbon nanotube, talc, alumina and glass fiber.

8. The porous film according to claim 7,
wherein the coating film includes a second filler, a content of which is equal to or more than 0.05 weight% with respect to the inorganic particles, and,
in the second filler, a hydrophilic group of a cellulose is substituted with a hydrophobic group.

9. The porous film according to claim 7,
wherein the coating film includes a second filler, a content of which is equal to or more than 0.05 weight% with respect to the inorganic particles, and
the second filler is a TEMPO-oxidized cellulose described below.

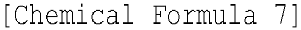

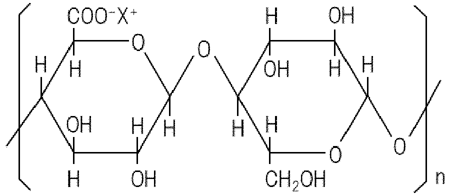

10. The porous film according to claim 7,
wherein the coating film includes A₂CO₃ or AHCO₃ (A = Li, Na, K or Rb).

11. The porous film according to claim 10,
wherein a content of the A₂CO₃ or the AHCO₃ is equal to or more than 1 weight% and equal to or less than 50 weight% with respect to the coating film.

12. The porous film according to claim 8,
wherein a content of the second filler is equal to or less than 12.4 weight% with respect to the inorganic particles.

13. A lithium ion cell including a positive electrode, a negative electrode, a separator and electrolyte solution, comprising:
the porous film according to any one of claims 6 to 12 as the separator.
